(19) Europäisches Patentamt / European Patent Office / Office européen des brevets

(11) **EP 2 057 757 B1**

(12) **EUROPEAN PATENT SPECIFICATION**

(45) Date of publication and mention
of the grant of the patent:
**22.06.2016 Bulletin 2016/25**

(21) Application number: **07768880.2**

(22) Date of filing: **27.07.2007**

(51) Int Cl.:
*H04L 1/06* (2006.01)   *H04B 7/06* (2006.01)
*H04L 5/00* (2006.01)

(86) International application number:
**PCT/KR2007/003625**

(87) International publication number:
**WO 2008/018703 (14.02.2008 Gazette 2008/07)**

(54) **DATA TRANSMISSION METHOD IN MULTIPLE ANTENNA SYSTEM**

DATENÜBERTRAGUNGSVERFAHREN IN EINEM MEHRANTENNENSYSTEM

PROCÉDÉ DE TRANSMISSION DE DONNÉES DANS UN SYSTÈME D'ANTENNES MULTIPLES

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **08.08.2006 KR 20060074482
09.11.2006 KR 20060110325
09.11.2006 KR 20060110326**

(43) Date of publication of application:
**13.05.2009 Bulletin 2009/20**

(73) Proprietor: **LG Electronics Inc.
Seoul 07336 (KR)**

(72) Inventors:
• **PARK, Hyung Ho**
**Anyang-si, Gyeongki-do 431-749 (KR)**
• **OH, Min Seok**
**Anyang-si, Gyeongki-do 431-749 (KR)**
• **CHO, Ki Hyoung**
**Anyang-si, Gyeongki-do 431-749 (KR)**
• **CHOI, Jin Soo**
**Anyang-si, Gyeongki-do 431-749 (KR)**
• **MOON, Sung Ho**
**Anyang-si, Gyeongki-do 431-749 (KR)**
• **CHUNG, Jae Hoon**
**Anyang-si, Gyeongki-do 431-749 (KR)**
• **SUNG, Doo Hyun**
**Anyang-si, Gyeongki-do 431-749 (KR)**
• **KANG, Seung Hyun**
**Anyang-si, Gyeongki-do 431-749 (KR)**

(74) Representative: **Ter Meer Steinmeister & Partner
Patentanwälte mbB
Nymphenburger Straße 4
80335 München (DE)**

(56) References cited:
**WO-A2-2005/046113      WO-A2-2006/015108
KR-A- 20050 122 756      US-B1- 6 810 007
US-B2- 7 009 932**

• **ZEKAVAT S A ET AL: "The merger of a single
oscillating-beam smart antenna and MC-CDMA:
transmit diversity, frequency diversity and
directionality", BROADBAND
COMMUNICATIONS FOR THE INTERNET ERA
SYMPOSIUM DIGEST, 2001 I EEE EMERGING
TECHNOLOGIES SYMPOSIUM ON SEP 10-11,
2001, PISCATAWAY, NJ, USA,IEEE, 10
September 2001 (2001-09-10), pages 107-112,
XP032406985, DOI: 10.1109/ETS.2001.979434
ISBN: 978-0-7803-7161-3**
• **NTT DOCOMO: "Channel Dependent Scheduling
with Cyclic Delay Diversity", 3GPP DRAFT;
R1-061192 MULTI-DEGREE CDD, 3RD
GENERATION PARTNERSHIP PROJECT (3GPP),
MOBILE COMPETENCE CENTRE ; 650, ROUTE
DES LUCIOLES ; F-06921 SOPHIA-ANTIPOLIS
CEDEX ; FRANCE, vol. RAN WG1, no. Shanghai,
China; 20060502, 2 May 2006 (2006-05-02),
XP050102077, [retrieved on 2006-05-02]**

- **INTEL CORPORATION: "Interference-aware MIMO Feedback: A text proposal", 3GPP DRAFT; R1-061150 INTERFERENCE-AWARE MIMO FEEDBACK TEXT PROPOSAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Shanghai, China; 20060501, 1 May 2006 (2006-05-01), XP050102038, [retrieved on 2006-05-01]**

**Description**

**Technical Field**

The present invention relates to wireless communication, and more particularly, to a data transmission method using a multiple antenna system.

**Background Art**

ZEKAVAT S ET AL: "The merger of a single oscillating-beam smart antenna and MC-CDMA: transmit diversity, frequency diversity and directionality" BRODBAND COMMUNICATIONS FOR THE INTERNET ERA SYMPOSIUM DIGEST, 2001 I EEE EMERGING TECHNOLOGIES SYMPOSIUM ON SEP 10-11, 2001, PISCATAWAY, NJ, USA, IEEE, 10 September 2001 (2001-09-10), pages 107-112, XP032406985, DOI: 10.1109/ETS.2001.979434, ISBN: 978-7803-7161-3 relates to transmitting data symbols over N carriers using a MC-CDMA scheme. The method uses an array of BS antennas to create transmit diversity and directionality. To achieve transmit diversity and directionality a time-varying phase shift is applied to each antenna array element.

WO 2006/015108 A2 is directed to transmission and reception of reference preamble signals in OFDMA or OFDM communication systems. A new preamble sequence is generated by first performing a cyclic shift or components of an initial CAZAC sequence in the frequency domain. By performing a cyclic shift in the frequency components of the initial CAZAC sequence, two new CAZAC sequences are generated. The sequences are subsequently processed using a fast Fourier transform.

WO 2005/046113 A2 relates to a multiple-input multiple-output (MIMO) system and method for transmitting on multiple antennas simultaneously and receiving on multiple antennas simultaneously.

In a wireless communication system, a signal transmitted to a receiver from a transmitter passes by a variety of propagation paths. The propagation paths vary depending on factors such as fading and multipath over time.

In order to secure reliability of communication according to various propagation paths, there has been proposed a diversity technique which repeatedly transmits the same data. If a number of signals are independently transmitted through diversity, even though a signal of some paths is received at a low level, signals of the other paths can have a high level. Accordingly, it is the diversity technique that combines a plurality of signals to achieve stable transmission and reception. The diversity technique includes frequency diversity for transmitting signals at different frequencies, time diversity for transmitting signals at different points of time, and spatial diversity using a plurality of transmission antennas.

Delay diversity is known as one of diversity techniques. In the delay diversity, a transmitter employs a plurality of antennas to transmit the same data. For example, a second antenna transmits data more delayed than that of a first antenna. The first antenna and the second antenna provide an independent multipath to implement diversity. An example of the delay diversity can refer to J. Tan, G. L. Stuber, Multicarrier delay diversity modulation for MIMO systems, IEEE Trans. on Wireless Comm., Vol. 3, No. 5, pp. 1756-1763, Sep. 2004.

It is general that a channel environment concurrently undergoes frequency selective fading caused by delay spread and time selective fading mainly caused by Doppler frequency. According to the delay diversity technique, frequency selectivity can be given through time delay to increase diversity gain on a frequency flat channel.

However, the conventional diversity technique is not adaptive to the channel environment in the time domain. Therefore, there is a need for method which can secure reliability of communication despite a change in channels.

**Disclosure of Invention**

**Technical Problem**

It is an object of the present invention to provide a data transmission method using multiple antennas for improving time selectivity.

It is another object of the present invention to provide a data transmission method using multiple antennas for improving time-frequency selectivity.

The objects are solved by the subject-matter of the independent claims.

**Technical Solution**

Preferably, a transmitter includes a plurality of antennas, an IFFT unit for providing a time domain symbol by performing inverse fast Fourier transform and a phase shifter for cyclically shifting a phase of the time domain symbol.

Preferably, the transmitter includes a frequency delay unit for cyclically delaying a frequency of a frequency domain symbol, an IFFT unit for transforming the frequency domain symbol into a time domain symbol and an antenna for transmitting the time domain symbol.

Preferably, a data transmission method in a multiple antenna system includes preparing a plurality of time domain symbols, shifting a phase of each of the plurality of time domain symbols and transmitting a plurality of phase-shifted time domain symbols through a plurality of antennas.

**Advantageous Effects**

Time selectivity can be obtained through the phase shift in time domain (or the frequency delay in frequency domain). Also, frequency selectivity and time selectivity can be adaptively controlled through the phase shift and the time delay in the time domain.

There is trade-off between multiple-user diversity obtained through scheduling in the frequency domain and frequency diversity for increasing the frequency selectivity. Since diversity gain in the time domain can be alternatively secured although diversity gain in the frequency domain is not secured, overall diversity gain and multiple-user diversity gain can be secured concurrently. The time-frequency selectivity and precoding technique can be combined with each other to obtain additional diversity gain.

**Brief Description of the Drawings**

The above and other objects, features and advantages of the present invention will be apparent from the following detailed description of the preferred embodiments of the invention in conjunction with the accompanying drawings, in which:

FIG. 1 is a block diagram showing a communication system according to an example of the present invention;
FIG. 2 is a block diagram illustrating a transceiver according to an example of the present invention;
FIG. 3 is a block diagram illustrating a transmitter according to another example of the present invention;
FIG. 4 is a block diagram illustrating a transmitter according to another example of the present invention;
FIG. 5 is a block diagram illustrating a transmitter according to another example of the present invention;
FIG. 6 is a block diagram illustrating a transmitter according to another example of the present invention;
FIG. 7 is a block diagram illustrating a transmitter according to another example of the present invention;
FIG. 8 is a block diagram illustrating a transmitter according to another example of the present invention;
FIG. 9 is a block diagram illustrating a transmitter according to another example of the present invention;
FIG. 10 is a block diagram illustrating a transmitter according to another example of the present invention;
FIG. 11 is a block diagram illustrating a transmitter according to another example of the present invention;
FIG. 12 is a block diagram illustrating a transmitter according to another example of the present invention;
FIG. 13 is a block diagram illustrating a transmitter according to another example of the present invention;
FIG. 14 is a flow chart illustrating a data transmission method according to an example of the present invention;
FIG. 15 is a block diagram illustrating a transmitter according to another example of the present invention;
FIG. 16 is a block diagram illustrating a precoding process in case where the number of transmission antennas is 2;
FIG. 17 is a diagrammatic view illustrating a precoding process in case where the number of transmission antennas is 4;
FIG. 18 is a diagrammatic view illustrating a precoding process which is multiplexed spatially in case where the number of transmission antennas is 2;
FIG. 19 is a diagrammatic view illustrating a precoding process which is multiplexed spatially in case where the number of transmission antennas is 4 and the transmission rate is 4;
FIG. 20 is a diagrammatic view illustrating a precoding process which is multiplexed spatially in case where the number of transmission antennas is 4 and the transmission rate is 2;
FIG. 21 is a diagrammatic view illustrating a precoding process which is multiplexed spatially in case where the number of transmission antennas is 4 and the transmission rate is 3;
FIG. 22 is a block diagram illustrating a transmitter according to another example of the present invention;
FIG. 23 is a block diagram illustrating a transmitter according to another example of the present invention;
FIG. 24 is a block diagram illustrating a transmitter according to another example of the present invention;
FIG. 25 is a block diagram illustrating a transmitter according to another example of the present invention;
FIG. 26 is a block diagram illustrating a transmitter according to another example of the present invention;
FIG. 27 is a block diagram illustrating a transmitter according to another example of the present invention;
FIG. 28 is a block diagram illustrating a transmitter according to another example of the present invention;
FIG. 29 is a block diagram illustrating a transmitter according to another example of the present invention; and
FIG. 30 is a flow chart illustrating a data transmission method according to another example of the present invention.

**Mode for the Invention**

The technique which will be described hereinafter can be used in downlink and uplink. Downlink means communication from a base station (BS) to a user equipment (UE) and uplink means communication from the user equipment to the base station. The base station generally refers to a fixed station which communicates with the user equipment, and may be called other terminologies such as a node-B, a base transceiver system (BTS), an access point or the like. The user equipment can have immobility or mobility, and may be called other terminologies such as a mobile station (MS), a user terminal (UT), a subcarrier station (SS), a wireless device or the like.

I. SYSTEM

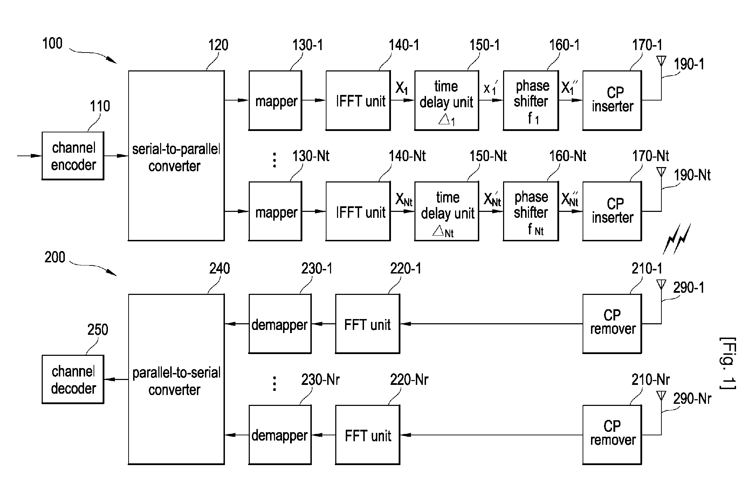

FIG. 1 is a block diagram showing the inner construction of a communication system according to an example of the present invention. The communication system is a multi-carrier communication system employing orthogonal frequency division multiplexing (OFDM). The communication system is widely deployed to provide various communication services including voice, packet data, etc.

Referring to FIG. 1, the communication system comprises a transmitter 100 and a receiver 200. In downlink, the transmitter 100 can be a part of the base station, and the receiver 200 can be a part of the user equipment. In uplink, the transmitter 100 can be a part of the user equipment, and the receiver 200 can be a part of the base station. The base station can comprise a plurality of receivers and a plurality of transmitters. The user equipment can also include a plurality of receivers and a plurality of transmitters.

The transmitter 100 comprises a channel encoder 110, a serial-to-parallel converter 120, mappers 130-1, ..., 130-Nt, inverse fast Fourier transform units (IFFTs) 140-1, ..., 140-Nt, time delay units 150-1, ..., 150-Nt, phase shifters 160-1, ..., 160-Nt and cyclic prefix (CP) inserters 170-1, ..., 170-Nt. Also, the transmitter 100 comprises Nt (Nt>1) antennas 190-1, ..., 190-Nt.

The channel encoder 110 receives a stream of information bits and encodes the received information bits according to a predetermined coding scheme to form coded data. The information bits may include text, voice, image or other data. The channel encoder 110 may additionally have a spare code for error correction so as to reduce the effect of a noise generated from a channel. The error correction code may be a turbo code. The turbo code is a systematic code which comprises information bits as systematic bits. If a code rate of the turbo code is 1/3, two parity bits are allocated to one systematic bit. The error correction code is not limited to the turbo code, but the technical sprit of the present invention can be applied to a low density parity check code (LDPC) or other convolution codes.

The serial-to-parallel converter 120 converts the serial type of coded data which are generated from the channel encoder 110 into parallel type data.

Each of the mapper 130-1, ..., 130-Nt provides a symbol into which each coded data is modulated into according to a predetermined modulation scheme. That is, the coded data is mapped to a symbol expressing a position according to an amplitude and phase constellation by the mappers 130-1, ..., 130-Nt. In this case, there is no limitation in modulation scheme, and an m-quadrature phase shift keying (m-PSK) or an m-quadrature amplitude modulation (m-QAM) can be used. For example, the m-PSK may be BPSK, QPSK or 8-PSK, and the m-QAM may be 16-QAM, 64-QAM or 256-QAM.

Each of the IFFT units 140-1, ..., 140-Nt transforms symbols in a frequency domain into time domain samples ($x_k$, $1 \leq k \leq Nt$, hereinafter, referred to as 'OFDM symbol') by performing inverse fast Fourier transform (IFFT). The IFFT units 140-1, ..., 140-Nt can perform any inverse discrete Fourier transform (IDFT). A first IFFT unit 140-1 can generate a first time domain sample $x_1$. A second IFFT unit 140-2 can generate a second time domain sample x. An Nt-th IFFT unit 104-Nt can generate an Nt-th time domain sample $x_{Nt}$.

Each of the time delay units 150-1, ..., 150-Nt delays a time domain sample $x_k$ generated from each of the IFFT units 140-1, ..., 140-Nt to generate a time-delayed sample $x_k'$. A first time delay unit 150-1 can delay a first time domain sample $x_1$ by a first delay period $\Delta_1$ to generate a first time-delayed sample $x_1'$. A second time delay unit 150-2 can delay a second time domain sample $x_2$ by a second delay period $\Delta_2$ to generate a second time-delayed sample $x_2'$. Also, an Nt-th time delay unit 150-Nt can delay an Nt-th time domain sample $x_{Nt}$ by an Nt-th delay period $\Delta_{Nt}$ to generate an Nt-th time-delayed sample $x_{Nt}'$.

Each of the time delay units 150-1, ..., 150-Nt can cyclically delay the time domain samples x . The cyclic delay refers to generating the first time-delayed sample $x_1'$ in such a manner that a rear portion delayed out of the first time domain sample is again appended to a front portion of the first time domain sample in case where the first time domain sample $x_1$ is delayed by the first delay period $\Delta_1$. That is, a sample exceeding a valid length of the symbol is again inserted to an initial portion of the symbol.

The operation of the time delay units 150-1, ..., 150-Nt can be expressed by the following Equation 1.

## MathFigure 1

$$x_k{}' = x_k(t - \triangle_k)$$

where a k-th delay period $\triangle_k$ denotes a delay period of a symbol transmitted from a k-th antenna in a time domain.

Since the frequency selectivity varies depending on the delay periods $\triangle_k$, the delay periods $\triangle_k$ can be set in various manners according to a channel environment. An antenna has a delay period different from that of the other antenna or it has the same delay period with the other antenna. The delay periods $\triangle_k$ can increase sequentially by each antenna. For example, the delay period $\triangle_k$ can be set as follows: $\triangle_k = \triangle_{k-1} + C$ (where C is constant). The delay periods $\triangle_k$ may vary depending on time or user. There is no limitation in a scheme of setting the delay periods $\triangle_k$, and other various schemes can be used.

At least one of the delay periods $\triangle_k$ may have a zero value '0'. That is, it is possible to delay only some of the symbols transmitted from a plurality of antennas 190-1, ..., 190-Nt.

Each of the phase shifters 160-1, ..., 160-Nt shift a phase of the time-delayed sample x ' generated from each of the time delay units 150-1, ..., 150-Nt to generate a phase-shifted sample $x_k$". A first phase shifter 160-1 can shifts a first time-delayed sample x ' by a first phase period f to generate a first phase-shifted sample $x_1$". A second phase shifter 160-2 can shifts a second time-delayed sample x ' by a second phase period f to generate a second phase-shifted sample x ". An Nt-th phase shifter 160-Nt can shifts an Nt-th time-delayed sample $x_{Nt}$' by an Nt-th phase period f to generate an Nt-th phase-shifted sample $x_{Nt}$".

Each of the phase shifters 160-1, ..., 160-Nt can cyclically shift a phase of the time-delayed sample $(x_k')$. The cyclic delay refers to generating the first phase-shifted sample $x_1$" in such a manner that a portion shifted out of the first time-delayed sample is again appended to a portion created newly of the first time-delayed sample created newly in case where the first time-delayed sample x ' is delayed by the first phase period $f_1$.

The operation of the phase shifters 160-1, ..., 160-Nt can be expressed by the following Equation 2.

## MathFigure 2

$$x_k{}'' = x_k{}' \, e^{j2\pi f_k t}$$

where a k-th phase period $(f_k)$ denotes a period by which a phase is shifted in a time domain of a symbol transmitted from a k-th antenna. The phase shifters 160-1, ..., 160-Nt shift phases of the time domain samples by

$$e^{j2\pi f_k t}$$

.

Since the time selectivity varies depending on the phase periods f , the phase periods $f_k$ can be set in various manners according to a channel environment. The phase periods $f_k$ may have different values or the same value by each antenna. Also, the phase periods $f_k$ can increase sequentially by each antenna. For example, the phase periods f can be set as follows: f = f + C (where C is constant). The phase periods f may vary depending on time or user. There is no limitation in a scheme of setting the phase periods f , and other various schemes can be used.

At least one of the phase periods $f_k$ may have a zero value '0'. That is, it is possible to shift a phase of only some of the symbols transmitted from a plurality of antennas 190-1, ... , 190-Nt.

Each of the CP inserters 170-1, ..., 170-Nt inserts a cyclic prefix (CP) into a time domain sample so as to remove the interference between sub-carriers and the interference between symbols. The time domain sample inserted with the CP is transmitted from each of the antennas 190-1, ..., 190-Nt.

The delay periods $\triangle_k$ or the phase periods f as described above may vary depending k k on time. The delay periods $\triangle_k$ and the phase periods f can be expressed by the k k following Equation 3:

## MathFigure 3

$$\triangle_k \rightarrow \triangle_k(t) , \qquad f_k \rightarrow f_k(t)$$

The delay periods $\Delta_k$ or the phase periods f processed at the k-th antenna may vary k k with every OFDM symbol.

The delay periods $\Delta_k$ or the phase periods $f_k$ k may vary depending on user. The delay periods $\Delta_k$ and the phase periods f can be expressed by the following Equation 4: k k

MathFigure 4

$$\triangle_k \rightarrow \triangle_k(u_j), \qquad f_k \rightarrow f_k(u_j)$$

The delay periods $\Delta_k$ or the phase periods f k processed at the k-th antenna every OFDM symbol may vary depending on user $u_j$.

The receiver 200 includes CP removers 210-1, ..., 210-Nr, fast Fourier transform (FFT) units 220-1, ..., 220-Nr, demappers 230-1, ..., 230-Nr, a parallel-to-serial converter 240 and a channel decoder 250. The receiver 200 includes Nr (Nr>1) antennas 290-1, ..., 290-Nt.

The antennas 290-1, ..., 290-Nt of the receiver 200 may be provided in a single number or plural numbers. The receiver 200 having one antenna includes one CP remover, one FFT unit and one demapper. That is, the communication system according to the present invention may be a multiple-input multiple-output (MIMO) system or a multiple-input single-output (MISO) system. The MIMO system employs a plurality of transmission antennas and a plurality of reception antennas. The MISO system employs a plurality of transmission antennas and a single reception antenna.

Each of the CP removers 210-1, ..., 210-Nr eliminate a cyclic prefix (CP) from a signal received from each of the antennas 290-1, ..., 290-Nr. A sample eliminated of the CP is converted into a symbol of a frequency domain by each of the FFT units 220-1, ..., 220-Nr. Each of the demapper 230-1, ..., 230-Nr demaps the frequency domain symbol to the coded data. The parallel-to-serial converter 240 converts parallel coded data into serial coded data. The channel decoder 250 decodes the coded data according to a predetermined decoding scheme.

A frequency response to a channel through which a signal from Nt antennas is transmitted by Nt antennas can be expressed by the following Equation 5:

MathFigure 5

$$H(f) = H_1(f\text{-}f_1)e^{-j2\pi\triangle_1 f} + H_2(f\text{-}f_2)e^{-j2\pi\triangle_2 f} + \ldots + H_{Nt}(f\text{-}f_{Nt})e^{-j2\pi\triangle_{Nt} f}$$

where $H_k$ (1≤k≤Nt) denotes a frequency response to a channel for a k-th antenna. That is, a frequency delay by the phase periods f k and a phase shift by the delay periods $\Delta_k$ appear in the frequency response due to the time delay by the time delay units 150-1, ..., 150-Nt and the phase shift by the phase shifters 160-1, ..., 160-Nt in the time domain. The frequency response shown in Equation 5 can be expressed in the time response to the identical channel as shown in the following Equation 6:

MathFigure 6

$$h(t) = h_1(t\text{-}\triangle_1)e^{2\pi f_1 t} + h_2(t\text{-}\triangle_2)e^{j2\pi f_2 t} + \ldots + h_{Nt}(t\text{-}\triangle_{Nt})e^{j2\pi f_{Nt} t}$$

A phase shift by the phase periods $f_k$ k and a time delay by the delay periods $\Delta_k$ appear in the time response due to the time delay by the time delay units 150-1, ..., 150-Nt and the phase shift by the phase shifters 160-1, ..., 160-Nt in the time domain.

The time of a symbol in the time domain can be delayed and the phase of the symbol is shifted so as to transmit the symbol. Thus, frequency selectivity can increases due to the time delay and time selectivity can increase due to the phase shift.

In a general orthogonal frequency division multiplexing(OFDM) / orthogonal frequency division multiple access (OFDMA) system, multiple-user diversity is obtained through scheduling in the frequency domain. The multiple-user diversity can be regarded as being in a trade-off relationship with the frequency diversity for increasing the frequency selectivity. As gain of the multiple-user diversity increases, gain of the frequency diversity decreases. This trade-off relationship can be offset. Since diversity gain in the time domain can be alternatively secured although diversity gain in the frequency domain is not secured, overall diversity gain and multiple-user diversity gain can be secured concurrently.

In addition, since samples transmitted by each transmission antenna are differentially delayed in the time domain and reaches a receiver, complexity according to detection of the samples by the receiver can be reduced.

The following Equation 7 expresses the fact that there is no variation between antennas in terms of the frequency response to the channel:

MathFigure 7

$$H_1(f\text{-}f_1) \simeq H_2(f\text{-}f_2) \simeq \dots \simeq H_{Nt}(f\text{-}f_{Nt})$$

In case where there is no variation in the frequency response of the channel between antennas, the time delay by a corresponding antenna can be performed independently in the time domain. A variation in the channel due to the time delay is caused to be artificially induced to obtain diversity in the frequency domain.

The following Equation 8 expresses the fact that there is no variation between antennas in terms of the time response to the channel:

MathFigure 8

$$h_1(t\text{-}\triangle_1) \simeq h_2(t\text{-}\triangle_2) \simeq \dots \simeq h_{Nt}(t\text{-}\triangle_{Nt})$$

In case where there is no variation in the time response of the channel between antennas, the phase shift by a corresponding antenna can be performed independently in the time domain. A variation in the channel due to the phase shift is caused to be artificially induced to obtain diversity in the time domain.

The diversity in the time domain and the diversity in the frequency domain are adaptively controlled. Since diversity gain in the time domain can be alternatively secured although diversity gain in the frequency domain is not secured, overall diversity gain can be secured concurrently.

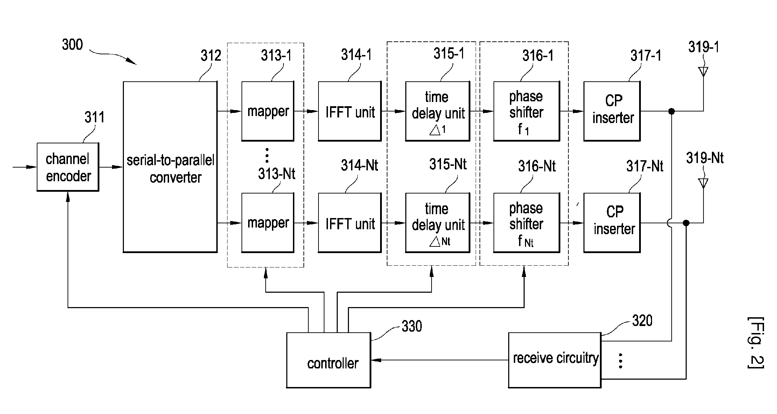

FIG. 2 is a block diagram illustrating a transceiver according to an example of the present invention. In this case, the transceiver may be a part of a base station and a part of a user equipment.

Referring to FIG. 2, the transceiver 300 further comprises a receive circuitry 320 and a controller 330 besides the transmitter 100 of FIG. 1.

The receive circuitry 320 receives signals from the receiver (not shown) from antennas 319-1, ..., 319-Nt. The receive circuitry 320 digitalizes the received signals for application to the controller 330.

The controller 330 extracts feedback information from the digitalized signals applied thereto from the receive circuitry 320. The operation of extracting the feedback information includes a general demodulation and decoding.

The feedback information may include Doppler frequency and delay spread. The controller 330 can adaptively control the delay periods $\Delta_k$ of the time delay units 315-1, ..., 315-Nt and the phase periods $f_k$ of the phase shifters 316-1, ..., 316-Nt based on the feedback information.

The feedback information may include channel quality information (CQI). The controller 330 can determine a modulation and coding scheme (MCS) based on the CQI to provide a coding scheme to a channel encoder 311 as well as a modulation scheme to mappers 313-1, ..., 313-Nt.

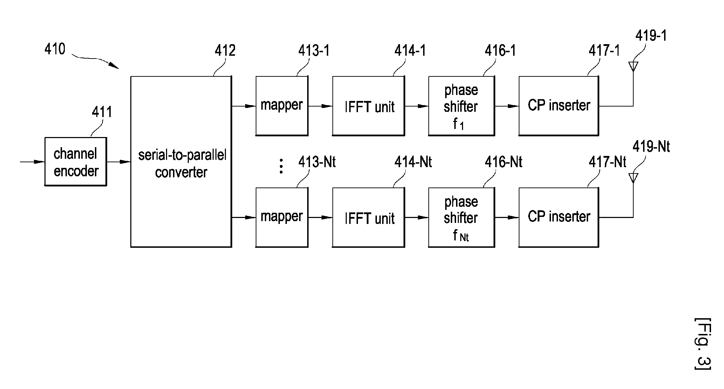

FIG. 3 is a block diagram illustrating a transmitter according to another example of the present invention.

Referring to FIG. 3, a transmitter 410 and the transmitter 100 of FIG. 1 are identical to each other except that the time delay units are excluded in the transmitter 410.

The transmitter 410 allows phase shifters 416-1, ..., 416-Nt to shift a phase of an OFDM symbol by phase periods f . Each of cyclic prefix (CP) inserters 417-1, ..., 417-Nt inserts a cyclic prefix (CP) to samples with shifted phases, so that the samples inserted with the CP can be transmitted from each of the antennas 419-1, ..., 419-Nt. Only the time selectivity can be improved by shifting the phases of the symbols without the time delay.

As another example of the present invention, arrangements of the phase shifters 416-1, ..., 416-Nt and the CP inserters 417-1, ..., 417-Nt may be changed. That is, a phase of the OFDM symbol can be shifted after insertng the CP to the OFDM symbol.

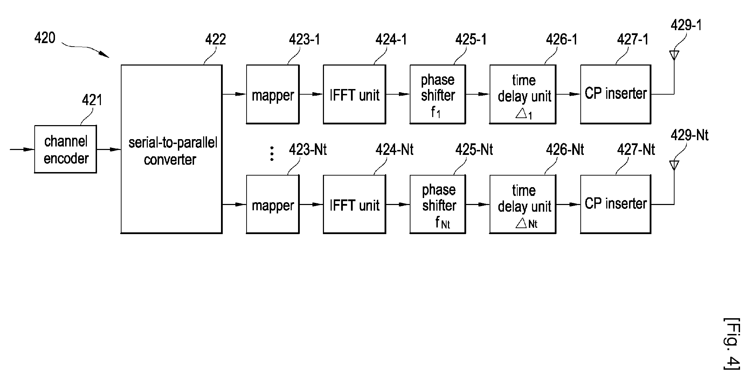

FIG. 4 is a block diagram illustrating a transmitter according to another example of the present invention.

Referring to FIG. 4, a transmitter 420 and the transmitter 100 of FIG. 1 are identical to each other except that the positions of phase shifters 425-1, ..., 425-Nt and time delay units 426-1, ..., 426-Nt are changed mutually.

The transmitter 420 allows phase shifters 425-1, ..., 425-Nt to shift a phase of an OFDM symbol by phase period f . Time delay units 426-1, ..., 426-Nt delay samples whose phases are shifted by delay period $\Delta_k$. Each of cyclic prefix (CP) inserters 427-1, ..., 427-Nt inserts a cyclic prefix (CP) to samples whose time is delayed, so that the samples inserted with the CP can be transmitted from each of the antennas 429-1, ..., 429-Nt.

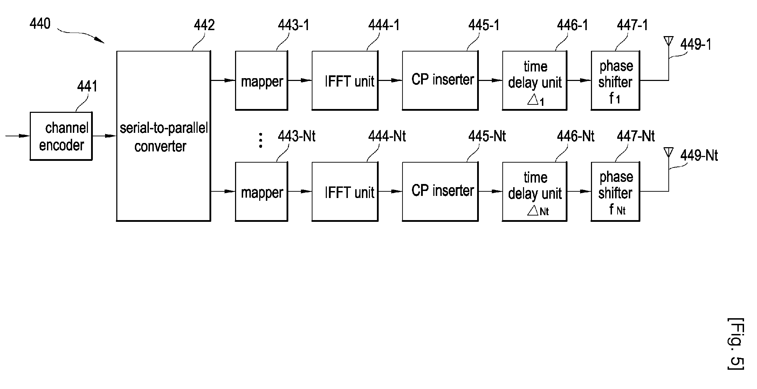

FIG. 5 is a block diagram illustrating a transmitter according to another example of the present invention.

Referring to FIG. 5, a transmitter 440 of FIG. 5 and the transmitter 100 of FIG. 1 are identical to each other except that CP inserters 445-1, ..., 445-Nt are positioned in front of time delay units 446-1, ..., 446-Nt and phase shifters 447-1, ..., 447-Nt in the transmitter 440 of FIG. 4.

The transmitter 440 first allows the CP inserters 445-1, ..., 445-Nt to insert a cyclic prefix (CP) to an OFDM symbol. The time delay units 446-1, ..., 446-Nt delay samples inserted with the CP by delay periods $\Delta_k$. Then, the phase shifters 447-1, ..., 447-Nt shift the samples whose time is delayed by phase periods $f_{Nt}$.

The arrangements of the CP inserters, the time delay units and the phase shifters are not limited to the above described examples, but can be permutated. In one example of the present invention, it is possible to dispose the time delay units, the CP inserters and the phase shifters in this order. In this case, each of the CP inserters inserts a cyclic prefix (CP) to samples whose time is delayed. Then, the phase shifters shift phases of the samples inserted with the CP. In another example of the present invention, it is possible to dispose the CP inserters, the phase shifters and the time delay units in this order. In another example of the present invention, it is also possible to dispose the phase shifters, the CP inserters and the time delay units in this order.

II. DUALITY

There exits a duality between the time domain and the frequency domain. The duality can be expressed by the following Equation 9:

MathFigure 9

$$x_k(t-\triangle_k)e^{j2\pi f_k t} \Leftrightarrow X_k(f-f_k)e^{-j2\pi \triangle_k f}$$

The time delay in the time domain is equivalent to the phase shift in the frequency domain, and the phase shift in the time domain is equivalent to the frequency delay in the frequency domain. The technical solution of the present invention can be easily implemented even in the frequency domain by using the duality between the time domain and the frequency domain.

Equation 9 uses the same representations with respect to equivalent terms for the sake of clarity of explanation, but the phase periods $\Delta_k$ in the frequency domain equivalent to the delay periods $\Delta_k$ in the time domain may have different values. Also, the frequency delays $f_k$ in the frequency domain equivalent to the phase periods $f_k$ in the time domain may have different values. For example, it is possible to have a function of

$$\triangle_{\text{freq. domain}} = \frac{2\pi}{N_t} \triangle_{\text{time domain}}$$

. However, it is also possible to utilize other various functions so as to obtain the phase periods or the delay periods in the frequency domain by using the delay periods or the phase periods in the time domain.

Now, an embodiment implemented in the frequency domain will be described hereinafter.

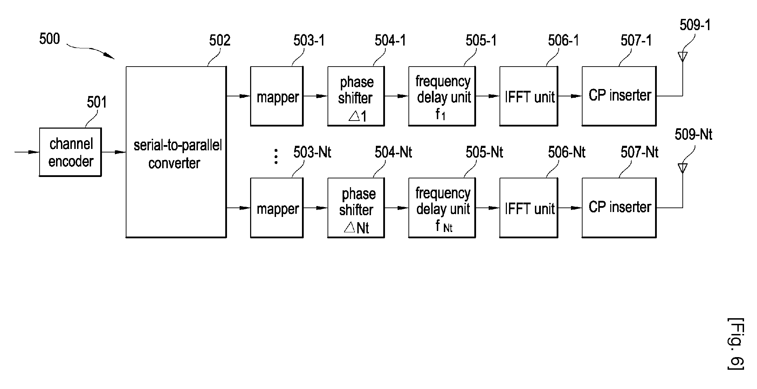

FIG. 6 is a block diagram illustrating a transmitter according to another example of the present invention.

Referring to FIG. 6, phase shifters 504-1, ..., 504-Nt and frequency delay units 505-1, ..., 505-Nt are positioned in front of IFFT units 506-1, ..., 506-Nt in the transmitter 500.

Each of the phase shifters 504-1, ..., 504-Nt shifts a phase of a symbol generated from each of the mappers 503-1, ..., 503-Nt. Each of the phase shifters 504-1, ..., 504-Nt shifts the phase of the symbol in the frequency domain, and can be regarded as being equivalent to each of the time delay units 150-1, ..., 150-Nt of FIG. 1 in the time domain. A first phase shifter 504-1 shifts a first symbol by a first phase period $\Delta_1$. A second phase shifter 504-2 shifts a second symbol by a second phase period $\Delta_2$. Thus, an Nt-th phase shifter 504-Nt shifts an Nt-th symbol by an Nt-th phase period $\Delta_{Nt}$.

Since the frequency selectivity varies depending on the phase periods $\Delta_k$, the phase periods $\Delta_k$ can be set variously according to a channel environment. The delay periods $\Delta_k$ may have different values or the same value by each antenna. Also, the phase periods $\Delta_k$ can increase sequentially by each antenna. For example, the phase periods $\Delta_k$ can be set as follows: $\Delta_k = \Delta_{k-1} + C$ (where C is constant). The phase periods $\Delta_k$ may vary depending on time or user. The phase periods $\Delta_k$ can be adaptively adjusted through feedback information received from the receiver (not shown). There is no limitation in a scheme of setting the phase periods $\Delta_k$, and other various schemes can be used.

At least one of the phase periodss $\Delta_k$ may have a zero value '0'. That is, it is possible to shift a phase of only some of the symbols transmitted from a plurality of antennas 509-1, ..., 509-Nt.

Each of the frequency delay units 505-1, ..., 505-Nt delays a frequency of the phase-shifted symbol generated from each of phase shifters 504-1, ..., 504-Nt. Each of the frequency delay units 505-1, ..., 505-Nt delays the frequency of the phase-shifted symbol in the frequency domain, and can be regarded as being equivalent to each of the phase shifter 160-1, ..., 160-Nt of FIG. 1 in the time domain. A first frequency delay unit 505-1 delays a first phase-shifted symbol by a first frequency delay $f_1$. A second frequency delay unit 505-2 delays a second phase-shifted symbol by a second frequency delay f . Thus, an Nt-th frequency delay unit 505-Nt delays an Nt-th phase-shifted symbol by an Nt-th frequency delay $f_{Nt}$.

Since the time selectivity varies depending on the frequency delays f , the frequency delays $f_k$ can be set variously according to a channel environment. The frequency delays fk may have different values or the same value by each antenna. Also, the frequency delays $f_k$ can increase sequentially by each antenna. For example, the frequency delays f k can be set as follows: f k = $f_{k-1}$ + C (where C is constant). The frequency delays $f_k$ may vary depending on time or user. There is no limitation in a scheme of setting the frequency delays fk, and other various schemes can be used.

At least one of the frequency delays fk may have a zero value '0'. That is, it is possible to shift a phase of only some of the symbols transmitted from a plurality of antennas 509-1, ..., 509-Nt.

Each of the IFFT units 506-1, ..., 506-Nt transforms symbols in a frequency domain into time domain samples by inverse fast Fourier transform (IFFT). Each of the CP inserters 507-1, ..., 507-Nt inserts a cyclic prefix (CP) into a time domain sample. Thereafter, the time domain sample inserted with the CP is transmitted from each of the antennas 509-1, ..., 509-Nt.

In another embodiment of the present invention, the arrangements of the phase shifters and the frequency delay units can be changed. It is possible to dispose the frequency delay units, the phase shifters and the CP inserters in this order. In this case, frequencies of symbols generated from the mappers are delayed first, and then phases of the frequency-delayed symbols are shifted. Thereafter, the phase-shifted symbols in the frequency domain are transformed into the time domain symbols by the IFFT units.

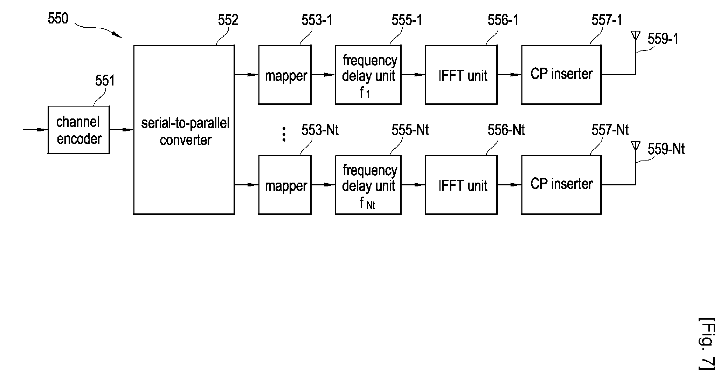

FIG. 7 is a block diagram illustrating a transmitter according to another example of the present invention.

Referring to FIG. 7, a transmitter 550 of FIG. 7 and the transmitter 500 of FIG. 6 are identical to each other except that the phase shifters are excluded in the transmitter 550.

The transmitter 550 allows each of the frequency delay units 555-1, ..., 555-Nt to delay a frequency of a symbol generated from each of the mappers 553-1, ..., 553-Nt by a frequency delay f . The frequency-delayed symbol is transformed into a time domain sample by each of the IFFT units 556-1, ..., 556-Nt. Then, the time domain sample is inserted with a cyclic prefix (CP) by each of the CP inserters 557-1, ..., 557-Nt. Thereafter, the time domain sample inserted with the CP is transmitted from each of the antennas 559-1, ..., 559-Nt.

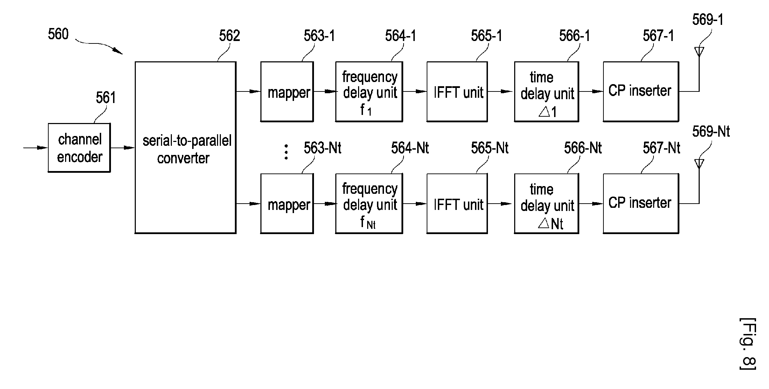

FIG. 8 is a block diagram illustrating a transmitter according to another example of the present invention.

Referring to FIG. 8, a transmitter 560 of FIG. 8 and the transmitter 500 of FIG. 6 are identical to each other except that the phase shifters 504-1, ..., 504-Nt in the frequency domain are replaced with time delay units 566-1, ..., 566-Nt in the time domain.

The transmitter 560 allows each of the frequency delay units 564-1, ..., 564-Nt to delay a frequency of a symbol generated from each of the mappers 563-1, ..., 563-Nt by a frequency delay $f_{Nt}$. The frequency-delayed symbol is transformed into a time domain sample by each of the IFFT units 565-1, ..., 565-Nt.. Then, the time domain samples are delayed by delay periods $\Delta_k$ by each of the time delay units 566-1, ..., 566-Nt. The time-delayed sample is inserted with a cyclic prefix (CP) by each of the CP inserters 567-1, ..., 567-Nt. Thereafter, the time domain sample inserted with the CP is transmitted from each of the antennas 569-1, ..., 569-Nt.

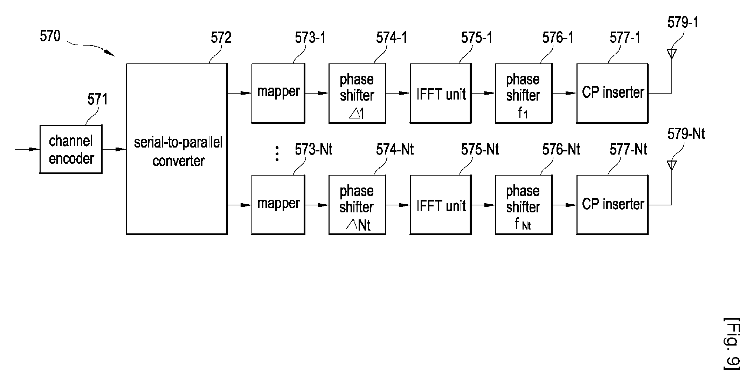

FIG. 9 is a block diagram illustrating a transmitter according to another example of the present invention.

Referring to FIG. 9, a transmitter 570 of FIG. 9 and the transmitter 500 of FIG. 6 are identical to each other except that the frequency delay units 505-1, ..., 505-Nt in the frequency domain are replaced with phase shifters 576-1, ..., 576-Nt in the time domain.

The transmitter 570 allows each of the phase shifters 574-1, ..., 574-Nt to shift a phase of a symbol generated from each of the mappers 573-1, ..., 573-Nt by phase periods $\Delta_k$ in the frequency domain. The phase-shifted symbol is transformed into a time domain sample by each of the IFFT units 575-1, ..., 575-Nt.. Then, the time domain samples are shifted by phase periods fk in the time domain by each of the phase shifters 576-1, ..., 576-Nt. The phase-shifted sample is inserted with a cyclic prefix (CP) by each of the CP inserters 577-1, ..., 577-Nt. Thereafter, the time domain sample inserted with the CP is transmitted from each of the antennas 579-1, ..., 579-Nt.


III. SPATIAL DIVERSITY


In the above description, the communication system equipped with modulators (for example, IFFT units) of each antenna has been described. Thus, different symbols can be transmitted from each antenna. The technical solution of the present invention can also be applied to a spatial diversity technique which transmits the same symbol from each antenna. A transmitter utilizing the spatial diversity technique will now be described hereinafter.

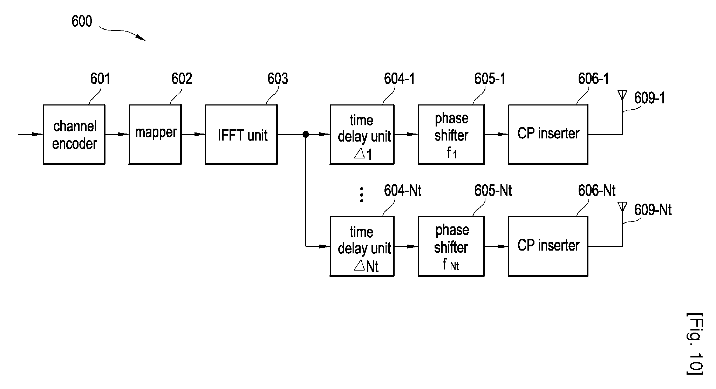

FIG. 10 is a block diagram illustrating a transmitter according to another example of the present invention.

Referring to FIG. 10, a transmitter 600 comprises a channel encoder 601, a mapper 602, an IFFT 603, time delay units 604-1, ..., 604-Nt, phase shifters 605-1, ..., 605-Nt and CP inserters 609-1, ..., 609-Nt. Also, the transmitter 600 comprises Nt (Nt>1) antennas 609-1, ..., 609-Nt.

The channel encoder 601 receives a stream of information bits and encodes the received information bits according to a predetermined coding scheme to form coded data. The mapper 602 provides a symbol into which the coded data is modulated according to a predetermined modulation scheme. The IFFT unit 603 transforms the frequency domain into a time domain sample (OFDM symbol) by inverse fast Fourier transform (IFFT). One OFDM sample is repeatedly transmitted from of the antennas 609-1, ..., 609-Nt.

Each of the time delay units 604-1, ..., 604-Nt delays the OFDM symbol generated from the IFFT unit 603 by delay periods $\Delta_k$. A first time delay unit 604-1 delays the OFDM symbol by a first delay period $\Delta_1$. A second time delay unit 604-2 delays the OFDM symbol by a second time delay period $\Delta_2$. Thus, a Nt-th time delay unit 604-Nt delays the OFDM symbol by a Nt-th delay period $\Delta_{Nt}$.

In this case, the delay periods $\Delta_k$ may have different values or the same value by k each antenna. The delay periods $\Delta_k$ can increase sequentially by each antenna. For example, the delay periods $\Delta_k$ can be set as follows: $\Delta_k = \Delta_{k-1} + C$ (where C is constant). The delay periods $\Delta_k$ may vary depending on time or user. There is no limitation in a scheme of setting the delay periods $\Delta_k$, and other various schemes can be used.

At least one of the delay periods $\Delta_k$ may have a zero value '0'. That is, it is possible to delay only some of the symbols transmitted from a plurality of antennas 609-1, ..., 609-Nt.

Each of the time delay units 604-1, ..., 604-Nt can cyclically delay the OFDM symbol, which is called a cyclic delay diversity. The cyclic delay diversity enables respective samples of the OFDM symbol to be cyclically shifted sequentially. In this case, the time delay units 604-1, ..., 604-Nt can be cyclic shifters. The cyclic shifters can cyclically shift (delay) the time domain samples contained in the OFDM symbol. The cyclic shifters again insert a sample exceeding an valid length of the symbol to an initial position of the symbol. A first time delay unit 604-1 performs no time delay ($\Delta_1$ =0), and a second time delay unit 604-2 cyclically delays the symbol, and the remaining time delay units delay the symbol sequentially.

The phase shifters 605-1, ..., 605-Nt shift phases of the time-delayed samples generated from the time delay units 604-1, ..., 604-Nt. A first phase shifter 605-1 shifts the time domain samples by a first phase period $f_1$. A second phase shifter 605-2 shifts the time-domain samples by a second phase period f . Thus, an Nt-th phase shifter 605-Nt shifts the time-domain samples by an Nt-th phase period $f_{Nt}$. That is, the phase shifters 605-1, ..., 605-Nt permit a phase of a symbol transmitted from a corresponding antenna to be shifted by $e^{j2\pi f_k t}$

The phase periods f k may have different values or the same value by each antenna. Also, the phase periods f k can increase sequentially by each antenna. For example, the phase periods $f_k$ can be set as follows: $f_k = f_{k-1} + C$ (where C is constant). The phase periods $f_k$ may vary depending on time or user. There is no limitation in a scheme of setting the phase periods $f_k$, and other various schemes can be used.

At least one of the phase periods $f_k$ may have a zero value '0'. That is, it is possible to shift a phase of only some of symbols transmitted from a plurality of antennas 609-1, ... , 609-Nt.

The phase shifters 605-1, ..., 605-Nt can cyclically shift phases of the time domain samples contained. At this time, a first phase shifter 605-1 performs no phase shift ($f_1$ =0), and a second shifter 605-2 cyclically shifts the symbol, and the remaining shifters shift the symbol sequentially..

Each of the CP inserters 606-1, ..., 606-Nt inserts a cyclic prefix (CP) into the time domain sample so as to remove the interference between sub-carriers and the interference between symbols. The time domain sample inserted with the CP is transmitted from each of the antennas 609-1, ..., 609-Nt.

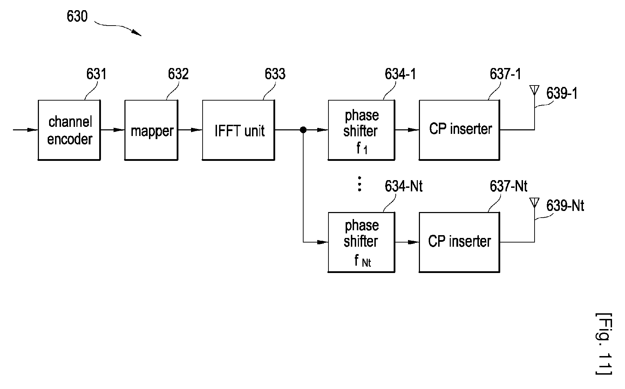

FIG. 11 is a block diagram illustrating a transmitter according to another example of the present invention.

Referring to FIG. 11, the transmitter 630 of FIG. 11 and the transmitter 600 of FIG. 10 are identical to each other except that the time delay units are excluded in the transmitter 630.

The transmitter 630 allows phase shifters 634-1, ..., 634-Nt to shift a phase of an OFDM symbol by phase periods $f_{Nt}$. Each of cyclic prefix (CP) inserters 637-1, ..., 637-Nt inserts a cyclic prefix (CP) to samples whose phases are shifted, so that the samples inserted with the CP can be transmitted from each of the antennas 639-1, ..., 639-Nt.

As another embodiment of the present invention, arrangements of the phase shifters 634-1, ..., 637-Nt and the CP inserters 637-1, ..., 637-Nt may be changed. That is, a phase of the OFDM symbol can be shifted after inserting the CP to the OFDM symbol.

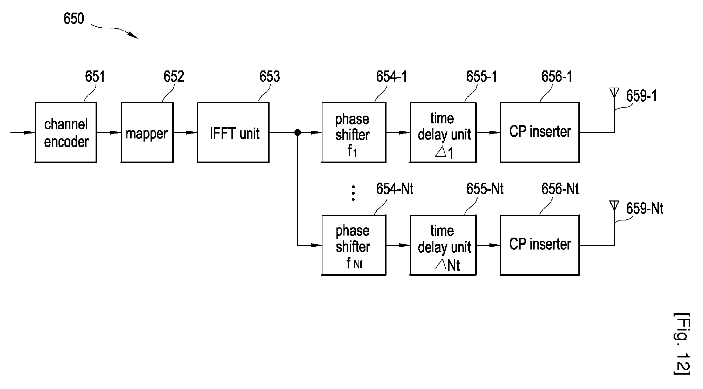

FIG. 12 is a block diagram illustrating a transmitter according to another example of the present invention.

Referring to FIG. 12, a transmitter 650 of FIG. 12 and the transmitter 600 of FIG. 10 are identical to each other except that the positions of phase shifters 654-1, ..., 654-Nt and time delay units 655-1, ..., 655-Nt are changed mutually.

The transmitter 650 allows phase shifters 654-1, ..., 654-Nt to shift a phase of an OFDM symbol by phase periods $f_{Nt}$. Time delay units 655-1, ..., 655-Nt delay phases-shifted samples by delay periods $\Delta_k$. Each of cyclic prefix (CP) inserters 656-1, ..., 656-Nt inserts a cyclic prefix (CP) to samples whose time is delayed, so that the samples inserted with the CP can be transmitted from each of the antennas 659-1, ..., 659-Nt.

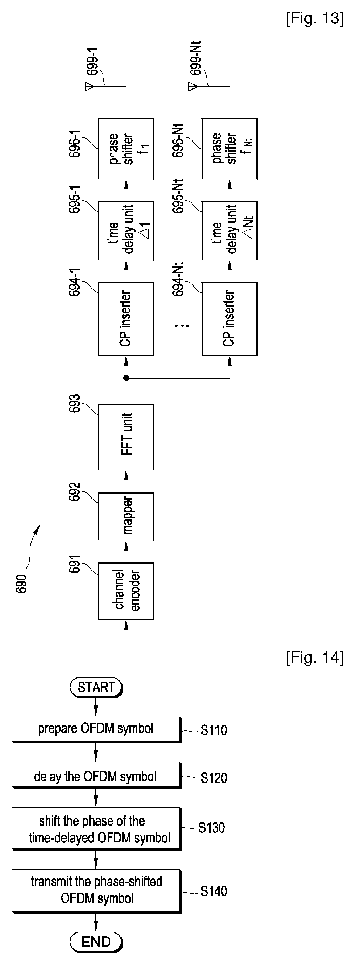

FIG. 13 is a block diagram illustrating a transmitter according to another example of the present invention.

Referring to FIG. 13 a transmitter 690 of FIG. 13 and the transmitter 600 of FIG. 10 are identical to each other except that CP inserters 694-1, ..., 694-Nt are positioned in front of time delay units 695-1, ..., 695-Nt and phase shifters 696-1, ..., 696-Nt in the transmitter 690 of FIG. 13.

The transmitter 690 first allows the CP inserters 694-1, ..., 694-Nt to insert a cyclic prefix (CP) to an OFDM symbol. The time delay units 695-1, ..., 695-Nt delay samples inserted with the CP by delay periods $\Delta_k$. Then, the phase shifters 696-1, ..., 696-Nt shift the time-delayed samples by phase periods $f_{Nt}$.

The arrangements of the CP inserters, the time delay units and the phase shifters are not limited to the above described examples, but can be permutated. In one example of the present invention, it is possible to dispose the time delay units, the CP inserters and the phase shifters in this order. In this case, each of the CP inserters inserts a cyclic prefix (CP) to samples whose time is delayed. Then, the phase shifters shift phases of the samples inserted with the CP. In another example of the present invention, it is possible to dispose the CP inserters, the phase shifters and the time delay units in this order. In another example of the present invention, it is also possible to dispose the phase shifters, the CP inserters and the time delay units in this order.

In the meantime, there exits a duality between the time domain and the frequency domain. The time delay in the time domain is equivalent to the phase shift in the frequency domain, and the phase shift in the time domain is equivalent to the frequency delay in the frequency domain. The transmitter using the spatial diversity technique will be able to be easily implemented even in the frequency domain by using the duality between the time domain and the frequency domain.

FIG. 14 is a flow chart illustrating a data transmission method according to an example of the present invention.

Referring to FIG. 14, IFFT is performed to prepare an OFDM symbol (S110) of a time domain. The time of OFDM symbol is delayed (S120). A phase of the time-delayed OFDM symbol is shifted (S130). Then, the phase-shifted OFDM symbol is transmitted (S140).

In another embodiment of the present invention, a phase of the OFDM symbol can be shifted and then the time of the phase-shifted OFDM symbol can be delayed. Another embodiment of the present invention, the phase shift or the frequency delay can be performed in a frequency domain in a step prior to preparing OFDM symbol in the time domain.

## IV. PRECODING

The transmitted symbol can be subjected to various precoding processes prior to the phase shift and the time delay. The precoding is used to transform the MIMO signal process of an antenna area into the process of a beam area.

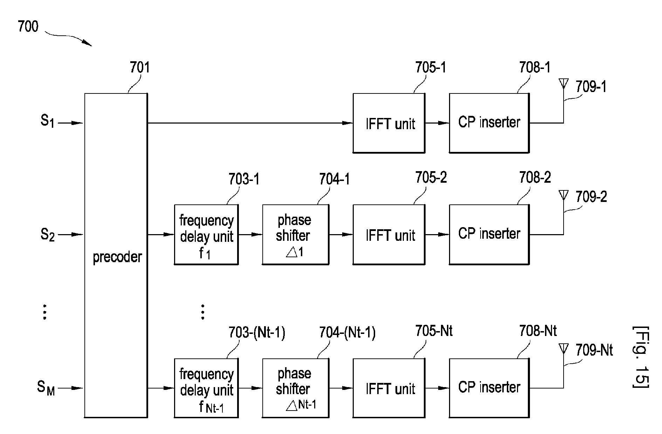

FIG. 15 is a block diagram illustrating a transmitter according to another example of the present invention.

Referring to FIG. 15, a transmitter 700 includes a precoder 701, frequency delay units 703-1, .., 703-(Nt-1), phase shifters 704-1, ..., 704-(Nt-1), IFFT units 705-1, ..., 705-Nt and CP inserters 708-1, ..., 708-Nt. Also, the transmitter 700 Nt (Nt>1) transmission antennas 709-1, ..., 709-Nt.

The precoder 701 precodes M input symbols Sm (m=1,...,M). The M input symbols may be the same and at least one of the M input symbols may be different from the other input symbols. Then, the M input symbols are transformed into Nt symbols according to the number of physical antennas by precoding. The precoding can be implemented by various techniques, which will be described later. The input symbols may be symbols which are channel-coded and constellation-mapped by mappers.

A first one of symbols generated from the precoder 701 is converted into a time domain symbol by the IFFT unit 705-1. A second one to an (Nt-1)-th one of the symbols generated from the precoder 701 are differentially to cyclic delay and cyclic phase shift by the frequency delay units 703-1,.., 703-(Nt-1) and by the phase shifters 704-1, ..., 704-(Nt-1), and is inverted into the time domain symbols by the IFFT units 705-2, ..., 705-Nt. The CP is inserted to the time domain symbols by the CP inserters 708-1, ..., 708-Nt and then the time domain symbols inserted with the CP are transmitted from the transmission antennas 709-1, ..., 709-Nt.

In another embodiment of the present invention, positions of the frequency delay units 703-1, .., 703-(Nt-1) and the phase shifters 704-1, ..., 704-(Nt-1) can be permutated. That is, the precoded symbol can be first subjected to the phase shift and then can be subjected to frequency delay.

The operation of the frequency delay units 703-1, .., 703-(Nt-1) and the phase shifters 704-1, ..., 704-(Nt-1) in the frequency domain can be expressed by a matrix shown in the following Equation 10:

MathFigure 10

$$Q = \begin{bmatrix} 1 & 0 & 0 & \ldots & 0 \\ 0 & \delta_c(k-f_1)e^{j\triangle_1 k} & 0 & \ldots & 0 \\ 0 & 0 & \delta_c(k-f_2)e^{j\triangle_2 k} & \ldots & 0 \\ . & . & . & . & . \\ 0 & 0 & 0 & \ldots & \delta_c(k-f_{Nt-1})e^{j\triangle_{Nt-1} k} \end{bmatrix}$$

where

$$\delta_c(k-f_i)$$

denotes a cyclic delta function meaning that a symbol transmitted through an (i+1)-th transmission antennas from a k-th tone (sub-carrier) is cyclically delayed by a frequency delay $f_i$, and

$$e^{j\triangle_i k}$$

denotes that the symbol is cyclically shifted by a phase period $\triangle_i$ in the k-th tone. The Q matrix is composed of NtxNt and outputs symbols in the frequency domain in the k-th sub-carrier. According to the Q matrix, since time selectivity and frequency selectivity can be controlled by the frequency delay and the phase period, the Q matrix can be regarded as a matrix representing the selectivity control of time and frequency selectivity.

Assuming that the case where the number of transmission antennas is two is Q2, and the case where the number of transmission antennas is two is Q4, Q2 and Q4, can be expressed by the following Equation 11 based on Equation 10:

MathFigure 11

$$Q_2 = \begin{bmatrix} 1 & 0 \\ 0 & \delta_c(k-f_1)e^{j\triangle_1 k} \end{bmatrix}$$

$$Q_4 = \begin{bmatrix} 1 & 0 & 0 & 0 \\ 0 & \delta_c(k-f_1)e^{j\triangle_1 k} & 0 & 0 \\ 0 & 0 & \delta_c(k-f_2)e^{j\triangle_2 k} & 0 \\ 0 & 0 & 0 & \delta_c(k-f_3)e^{j\triangle_3 k} \end{bmatrix}$$

The precoding will be described hereinafter.

The precoding can employ a unitary matrix. The Fourier matrix as a kind of the unitary matrix is an LxL matrix

having 12 entries $p_{mn}$ of the following Equation 12:

MathFigure 12

$$p_{mn} = e^{j2\pi mn/L}$$

where m,n = 0, 1, ..., (L-1). Thus, 2x2 Fourier matrix can be expressed by the following Equation 13:

MathFigure 13

$$P_2 = \frac{1}{\sqrt{2}} \begin{bmatrix} 1 & 1 \\ 1 & e^{j\pi} \end{bmatrix} = \frac{1}{\sqrt{2}} \begin{bmatrix} 1 & 1 \\ 1 & -1 \end{bmatrix}$$

where

$$1/\sqrt{2}$$

is a normal constant of transmission symbol power.

The 4x4 Fourier matrix can be expressed by the following Euqation 14:

MathFigure 14

$$P_4 = \frac{1}{\sqrt{4}} \begin{bmatrix} 1 & 1 & 1 & 1 \\ 1 & e^{j\pi/2} & e^{j\pi} & e^{j3\pi/2} \\ 1 & e^{j\pi} & e^{j2\pi} & e^{j3\pi} \\ 1 & e^{j3\pi/2} & e^{j3\pi} & e^{j9\pi/2} \end{bmatrix} = \frac{1}{\sqrt{4}} \begin{bmatrix} 1 & 1 & 1 & 1 \\ 1 & j & -1 & -j \\ 1 & -1 & 1 & -1 \\ 1 & -j & -1 & j \end{bmatrix}$$

An entry of a multiple precoding matrix can be defined as represented by the following Equation 15 through a transform parameter g/G in the Fourier matrix:

MathFigure 15

$$p_{mn} = e^{j2\pi m\left(n + \frac{g}{G}\right)}$$

where m,n = 0, 1, ..., (L-1). For example, four Fourier matrixes can be defined by taking G=4. The four Fourier matrixes can be expressed by the following Equation 16:

MathFigure 16

$$P_2^0 = \frac{1}{\sqrt{2}} \begin{bmatrix} 1 & 1 \\ 1 & -1 \end{bmatrix}$$

$$P_2^1 = \frac{1}{\sqrt{2}} \begin{bmatrix} 1 & 1 \\ e^{j\pi/4} & -e^{j\pi/4} \end{bmatrix}$$

$$P_2^2 = \frac{1}{\sqrt{2}} \begin{bmatrix} 1 & 1 \\ e^{j\pi/2} & e^{j3\pi/4} \end{bmatrix}$$

$$P_2^3 = \frac{1}{\sqrt{2}} \begin{bmatrix} 1 & 1 \\ e^{j3\pi/4} & -e^{j3\pi/4} \end{bmatrix}$$

The precoding matrix and a matrix representing the time and frequency selectivity control will be hereinafter taken into consideration. A combination of the precoding matrix P and the matrix Q representing the time and frequency selectivity control is called a composite precoding matrix C.

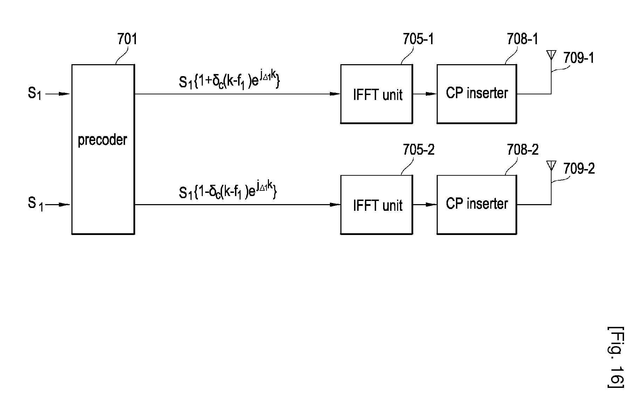

FIG. 16 is a block diagram illustrating a precoding process in case where the number of transmission antennas is 2.

Referring to FIG. 16, when the number of transmission antennas is 2 (Nt=2), a composite precoding matrix $C_2$ is expressed by the following Equation 17:

MathFigure 17

$$C_2 = Q_2 \times P_2 = \frac{1}{\sqrt{2}} \begin{bmatrix} 1 & 0 \\ 0 & \delta_c(k-f_1)e^{j\triangle_1 k} \end{bmatrix} \times \begin{bmatrix} 1 & 1 \\ 1 & -1 \end{bmatrix}$$

$$= \frac{1}{\sqrt{2}} \begin{bmatrix} 1 & 1 \\ \delta_c(k-f_1)e^{j\triangle_1 k} & -\delta_c(k-f_1)e^{j\triangle_1 k} \end{bmatrix}$$

When a pair of symbols S in a k-th tone are input to the precoder 701 in order to implement transmission diversity, symbols $\{N_{t1}, N_{t2}\}$ transmitted from respective antennas 709-1 and 709-2 are expressed by the following Equation 18:

MathFigure 18

$$\begin{bmatrix} N_{t1} \\ N_{t2} \end{bmatrix} = C_2^T \times \begin{bmatrix} S_1 \\ S_1 \end{bmatrix} = \frac{1}{\sqrt{2}} \begin{bmatrix} S_1\{1+\delta_c(k-f_1)e^{j\triangle_1 k}\} \\ S_1\{1-\delta_c(k-f_1)e^{j\triangle_1 k}\} \end{bmatrix}$$

where $()^T$ denotes a transpose of a matrix. Equation 18 represents precoding of input symbols and transmission of the precoded input symbols through the transmission antennas after applying the time and frequency selectivity to the precoded input symbols.

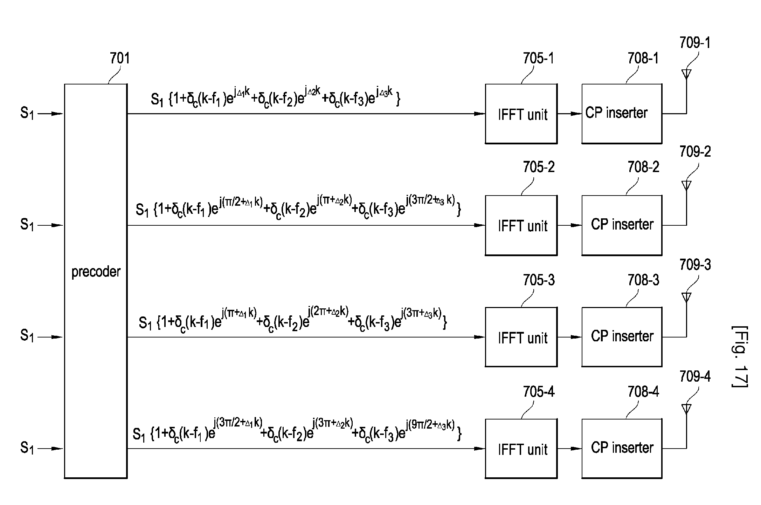

FIG. 17 is a diagrammatic view illustrating a precoding process in case where the number of transmission antennas is 4.

Referring to FIG. 17, when the number of transmission antennas is 4 (Nt=4), a composite precoding matrix $C_4$ is expressed by the following Equation 19:

MathFigure 19

$$C_4 = Q_4 \times P_4 = \begin{bmatrix} 1 & 0 & 0 & 0 \\ 0 & \delta_c(k-f_1)e^{j\triangle_1 k} & 0 & 0 \\ 0 & 0 & \delta_c(k-f_2)e^{j\triangle_2 k} & 0 \\ 0 & 0 & 0 & \delta_c(k-f_3)e^{j\triangle_3 k} \end{bmatrix} \times \frac{1}{\sqrt{4}} \begin{bmatrix} 1 & 1 & 1 & 1 \\ 1 & j & -1 & -j \\ 1 & -1 & 1 & -1 \\ 1 & -j & -1 & j \end{bmatrix}$$

$$= \frac{1}{\sqrt{4}} \begin{bmatrix} 1 & 1 & 1 & 1 \\ \delta_c(k-f_1)e^{j\triangle_1 k} & \delta_c(k-f_1)e^{j(\pi/2+\triangle_1 k)} & \delta_c(k-f_1)e^{j(\pi+\triangle_1 k)} & \delta_c(k-f_1)e^{j(3\pi/2+\triangle_1 k)} \\ \delta_c(k-f_2)e^{j\triangle_2 k} & \delta_c(k-f_2)e^{j(\pi+\triangle_2 k)} & \delta_c(k-f_2)e^{j(2\pi+\triangle_2 k)} & \delta_c(k-f_2)e^{j(3\pi+\triangle_2 k)} \\ \delta_c(k-f_3)e^{j\triangle_3 k} & \delta_c(k-f_3)e^{j(3\pi/2+\triangle_3 k)} & \delta_c(k-f_3)e^{j(3\pi+\triangle_3 k)} & \delta_c(k-f_3)e^{j(9\pi/2+\triangle_3 k)} \end{bmatrix}$$

When four identical symbols S in a k-th tone are input to the precoder 701 in order to implement transmission diversity, symbols $\{N_{t1}, N_{t2}, N_{t3}, N_{t4}\}$ transmitted from respective antennas 709-1, 709-2, 709-3, 709-4 are expressed by the following Equation 20:

MathFigure 20

$$\begin{bmatrix} N_{t1} \\ N_{t2} \\ N_{t3} \\ N_{t4} \end{bmatrix} = C_4^{\,T} \times \begin{bmatrix} S_1 \\ S_1 \\ S_1 \\ S_1 \end{bmatrix}$$

$$= \frac{1}{\sqrt{4}} \begin{bmatrix} S_1\{1+\delta_c(k\text{-}f_1)e^{j\triangle_1 k}+\delta_c(k\text{-}f_2)e^{j\triangle_2 k}+\delta_c(k\text{-}f_3)e^{j\triangle_3 k}\} \\ S_1\{1+\delta_c(k\text{-}f_1)e^{j(\pi/2+\triangle_1 k)}+\delta_c(k\text{-}f_2)e^{j(\pi+\triangle_2 k)}+\delta_c(k\text{-}f_3)e^{j(3\pi/2+\triangle_3 k)}\} \\ S_1\{1+\delta_c(k\text{-}f_1)e^{j(\pi+\triangle_1 k)}+\delta_c(k\text{-}f_2)e^{j(2\pi+\triangle_2 k)}+\delta_c(k\text{-}f_3)e^{j(3\pi+\triangle_3 k)}\} \\ S_1\{1+\delta_c(k\text{-}f_1)e^{j(3\pi/2+\triangle_1 k)}+\delta_c(k\text{-}f_2)e^{j(3\pi+\triangle_2 k)}+\delta_c(k\text{-}f_3)e^{j(9\pi/2+\triangle_3 k)}\} \end{bmatrix}$$

Symbols corresponding to the number of the transmission antennas 709-1, 709-2, 709-3 and 709-4 are subjected to the precoding process, and then are adaptively subjected to the time and frequency selectivity process. Subsequently, the symbols subjected to the time and frequency selectivity process is subjected to the IFFT and then is inserted with the CP so as to be transmitted from the corresponding transmission antennas 709-1, 709-2, 709-3 and 709-4.

The adaptive time and frequency selectivity control is a method which can efficiently provide diversity in a corresponding dimension requested by a system for channels functioning independently in the time domain and the frequency domain, respectively and multiple-user diversity. Since diversity gain in the time domain can be alternatively secured although diversity gain in the frequency domain is not secured, overall diversity gain and multiple-user diversity gain can be secured concurrently. In addition, matrix notation in which the adaptive time and frequency selectivity and the precoding technique are combined with each other will be able to be applied as tool which can more clearly represent the analysis and various performance analyses of the transceiver.

In addition, complexity of a receiver is substantially the same as detected complexity in the case of a single transmission antenna since symbols transmitted from each of multiple transmission antennas are differentially delayed to reach the receiver. If selectivity in the time domain and the frequency domain is applied efficiently, it is possible to provide various gains required by the system in such a manner that can secure both diversity gain in corresponding dimension and multiple-user scheduling gain.

In case of a space-frequency block code (SFBC) with respect to two transmission antennas, symbols transmitted from two adjacent sub-carriers and two transmission antennas can be expressed by the following Equation 21:

MathFigure 21

$$\begin{bmatrix} N_{t1}^1 & N_{t1}^2 \\ N_{t2}^1 & N_{t2}^2 \end{bmatrix} = C_2^{\,T} \times \begin{bmatrix} S_1 & -S_2^* \\ S_2 & S_1^* \end{bmatrix}$$

[217]

$$= \frac{1}{\sqrt{2}} \begin{bmatrix} S_1+\delta_c(k\text{-}f_1)e^{j\triangle_1 k}S_2 & \delta_c(k\text{-}f_1)e^{j\triangle_1 k}S_1^*-S_2^* \\ S_1-\delta_c(k\text{-}f_1)e^{j\triangle_1 k}S_2 & -\delta_c(k\text{-}f_1)e^{j\triangle_1 k}S_1^*-S_2^* \end{bmatrix}$$

Where $S_1^*$ and $S_2^*$ are complex conjugates for $S_1$ and $S_2$, respectively. $N_{t1}^1$ denotes a symbol transmitted from a first sub-carrier from a first antenna, $N_{t1}^2$ denotes a symbol transmitted from a second sub-carrier from the first antenna, $N_{t2}^1$ denotes a symbol transmitted from a first sub-carrier from a second antenna, and $N_{t2}^2$ denotes a symbol transmitted from a second sub-carrier from the second antenna.

The above Equation 21 can be extended with a space-time block code (STBC) with respect to two transmission antennas. In case of the STBC, $N_{t1}^1$ denotes a symbol transmitted from a first time slot from a first antenna, $N_{t1}^2$ denotes a symbol transmitted from a second time slot from the first antenna, $N_{t2}^1$ denotes a symbol transmitted from a first time slot from a second antenna, and $N_{t2}^2$ denotes a symbol transmitted from a second time slot from the second antenna.

The space-time block code (STBC) with respect to four transmission antennas can be expressed by the following Equation 22:

MathFigure 22

$$\begin{bmatrix} N_{t1}^1 & N_{t1}^2 \\ N_{t2}^1 & N_{t2}^2 \\ N_{t3}^1 & N_{t3}^2 \\ N_{t4}^1 & N_{t4}^2 \end{bmatrix} = C_4{}^T \times \begin{bmatrix} S_1 & -S_2^* \\ S_2 & S_1^* \\ S_1 & -S_2^* \\ S_2 & S_1^* \end{bmatrix}$$

The present invention is not limited to the above described example but can be applied to a various number of transmission antennas.

A frequency-switched transmit diversity (FSTD) relative to two transmission antennas can be expressed by the following Equation 23:

MathFigure 23

$$\begin{bmatrix} N_{t1}^1 & N_{t1}^2 \\ N_{t2}^1 & N_{t2}^2 \end{bmatrix} = C_2 \times \begin{bmatrix} S_1 & 0 \\ 0 & S_2 \end{bmatrix}$$

$$= \frac{1}{\sqrt{2}} \begin{bmatrix} S_1 & S_2 \\ S_1 \delta_c(k\text{-}f_1)e^{j\triangle_1 k} & -S_2 \delta_c(k\text{-}f_1)e^{j\triangle_1 k} \end{bmatrix}$$

where $N_{t1}^1$ denotes a symbol transmitted from a first sub-carrier from a first antenna, $N_{t1}^2$ denotes a symbol transmitted from a second sub-carrier from the first antenna, $N_{t2}^1$ denotes a symbol transmitted from a first sub-carrier from a second antenna, and $N_{t2}^2$ denotes a symbol transmitted from a second sub-carrier from the second antenna.

A frequency-switched transmit diversity (FSTD) relative to four transmission antennas can be expressed by the following Equation 24:

MathFigure 24

$$\begin{bmatrix} N_{t1}^1 & N_{t1}^2 & N_{t1}^3 & N_{t1}^4 \\ N_{t2}^1 & N_{t2}^2 & N_{t2}^3 & N_{t2}^4 \\ N_{t3}^1 & N_{t3}^2 & N_{t3}^3 & N_{t3}^4 \\ N_{t4}^1 & N_{t4}^2 & N_{t4}^3 & N_{t4}^4 \end{bmatrix} = C_4 \times \begin{bmatrix} S_1 & 0 & 0 & 0 \\ 0 & S_2 & 0 & 0 \\ 0 & 0 & S_3 & 0 \\ 0 & 0 & 0 & S_4 \end{bmatrix}$$

$$= \frac{1}{\sqrt{4}} \begin{bmatrix} S_1 & S_2 & S_3 & S_4 \\ S_1\delta_c(k-f_1)e^{j\triangle_1 k} & S_2\delta_c(k-f_1)e^{j(\pi/2+\triangle_1 k)} & S_3\delta_c(k-f_1)e^{j(\pi+\triangle_1 k)} & S_4\delta_c(k-f_1)e^{j(3\pi/2+\triangle_1 k)} \\ S_1\delta_c(k-f_2)e^{j\triangle_2 k} & S_2\delta_c(k-f_2)e^{j(\pi+\triangle_2 k)} & S_3\delta_c(k-f_2)e^{j(2\pi+\triangle_2 k)} & S_4\delta_c(k-f_2)e^{j(3\pi+\triangle_2 k)} \\ S_1\delta_c(k-f_3)e^{j\triangle_3 k} & S_2\delta_c(k-f_3)e^{j(3\pi/2+\triangle_3 k)} & S_3\delta_c(k-f_3)e^{j(3\pi+\triangle_3 k)} & S_4\delta_c(k-f_3)e^{j(9\pi/2+\triangle_3 k)} \end{bmatrix}$$

where $N_{t}^j$ denotes a symbol transmitted from a j-th sub-carrier from an i-th antenna (i=1,2,3,4, j=1,2,3,4).

The combination of the SFBC and the FSTD with respect to four transmission can be expressed by the following Equation 25:

MathFigure 25

$$\begin{bmatrix} N_{t1}^1 & N_{t1}^2 & N_{t1}^3 & N_{t1}^4 \\ N_{t2}^1 & N_{t2}^2 & N_{t2}^3 & N_{t2}^4 \\ N_{t3}^1 & N_{t3}^2 & N_{t3}^3 & N_{t3}^4 \\ N_{t4}^1 & N_{t4}^2 & N_{t4}^3 & N_{t4}^4 \end{bmatrix} = C_4^T \times \begin{bmatrix} S_1 & -S_2^* & 0 & 0 \\ S_2 & S_1^* & 0 & 0 \\ 0 & 0 & S_3 & -S_4^* \\ 0 & 0 & S_4 & S_3^* \end{bmatrix}$$

where $N_{t}^j$ denotes a symbol transmitted from a j-th sub-carrier from an i-th antenna (1=1,2,3,4, j=1,2,3,4).

The precoding process is not limited to the above example, but can adopt other various techniques.

V. PRECODING - SPATIAL MULTIPLEXING

A precoding process taking a spatial multiplexing into consideration will be described hereinafter. That is, if symbols $S_m$ input to a precoder 107 are the same with each other, a system is constructed which supports multiple transmission rate of 1. If symbols $S_m$ input to the precoder 701 are different from each other, a system is constructed which supports multiple transmission rates.

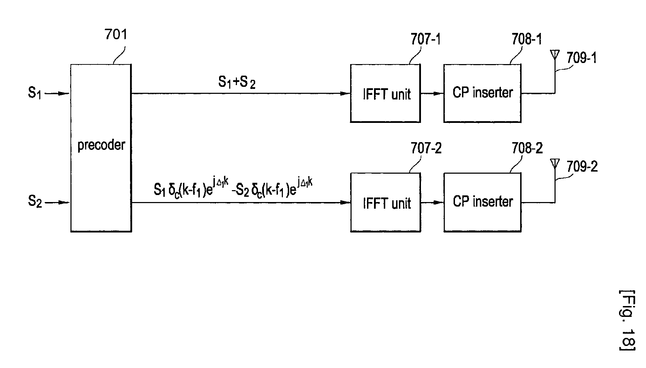

FIG. 18 is a diagrammatic view illustrating a precoding process which is multiplexed spatially in case where the number of transmission antennas is 2.

Referring to FIG. 18, when the number of transmission antennas is 2 (Nt=2), and symbols $S_1$ and $S_2$ in a k-th tone are input to the precoder 701 in order to implement transmission diversity, symbols $\{N_{t1}, N_{t2}\}$ transmitted from respective antennas 709-1 and 709-2 are expressed by the following Equation 26:

MathFigure 26

$$\begin{bmatrix} N_{t1} \\ N_{t2} \end{bmatrix} = C_2 \times \begin{bmatrix} S_1 \\ S_2 \end{bmatrix} = \frac{1}{\sqrt{2}} \begin{bmatrix} S_1 + S_2 \\ S_1 \delta_c(k-f_1)e^{j\triangle_1 k} - S_2 \delta_c(k-f_1)e^{j\triangle_1 k} \end{bmatrix}$$

At this time, a composite precoding matrix $C_2$ is the same as in Equation 17.

Equation 26 represents symbols which are subjected to the precoding and the time and frequency selectivity in a first antenna $N_{t1}$ and a second antenna $N_{t2}$ when the number of transmission antennas is two. This is a transmission method that subjects symbols $S_1$ and $S_2$ different by each transmission antenna to the precoding and the time and frequency selectivity and that satisfies a transmission rate of 2, but not a transmission rate of 1 having the precoding and the time and frequency selectivity relative to the same symbol $S_1$.

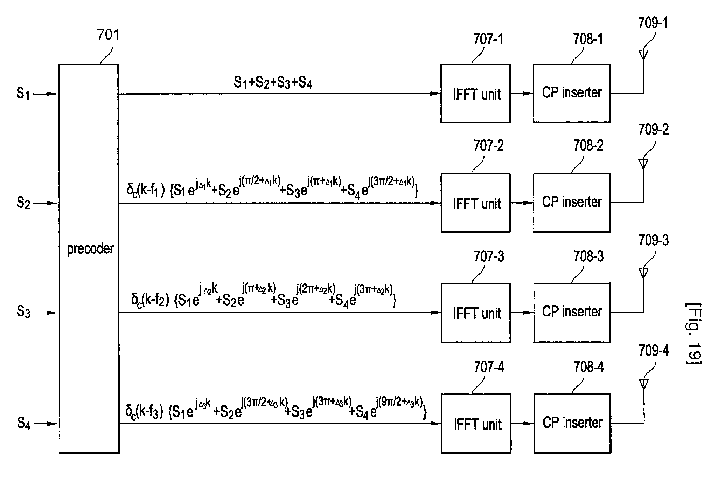

FIG. 19 is a diagrammatic view illustrating a precoding process which is spatially multiplexed where the number of transmission antennas is 4 and the transmission rate is 4.

Referring to FIG. 19, where the number of transmission antennas is 4 (Nt=4), when four symbols $S_1$, $S_2$, $S_3$, $S_4$ in a k-th tone are input to the precoder 701 in order to implement transmission diversity, symbols {$N_{t1}$, $N_{t2}$, $N_{t3}$, $N_{t4}$} transmitted from respective antennas 709-1, 709-2, 709-3, 709-4 are expressed by the following Equation 27:

MathFigure 27

$$\begin{bmatrix} N_{t1} \\ N_{t2} \\ N_{t3} \\ N_{t4} \end{bmatrix} = C_4 \times \begin{bmatrix} S_1 \\ S_2 \\ S_3 \\ S_4 \end{bmatrix}$$

$$= \frac{1}{\sqrt{4}} \begin{bmatrix} S_1 + S_2 + S_3 + S_4 \\ \delta_c(k-f_1)\{S_1 e^{j\triangle_1 k} + S_2 e^{j(\pi/2+\triangle_1 k)} + S_3 e^{j(\pi+\triangle_1 k)} + S_4 e^{j(3\pi/2+\triangle_1 k)}\} \\ \delta_c(k-f_2)\{S_1 e^{j\triangle_2 k} + S_2 e^{j(\pi+\triangle_2 k)} + S_3 e^{j(2\pi+\triangle_2 k)} + S_4 e^{j(3\pi+\triangle_2 k)}\} \\ \delta_c(k-f_3)\{S_1 e^{j\triangle_3 k} + S_2 e^{j(3\pi/2+\triangle_3 k)} + S_3 e^{j(3\pi+\triangle_3 k)} + S_4 e^{j(9\pi/2+\triangle_3 k)}\} \end{bmatrix}$$

At this time, a composite precoding matrix $C_4$ is the same as in above Equation 19.

When the number of the transmission antennas is four, the symbols $S_1$, $S_2$, $S_3$, $S_4$ are subjected to the precoding and the time and frequency selectivity so as to be transmitted from the transmission antennas, which provides a transmission rate of 4.

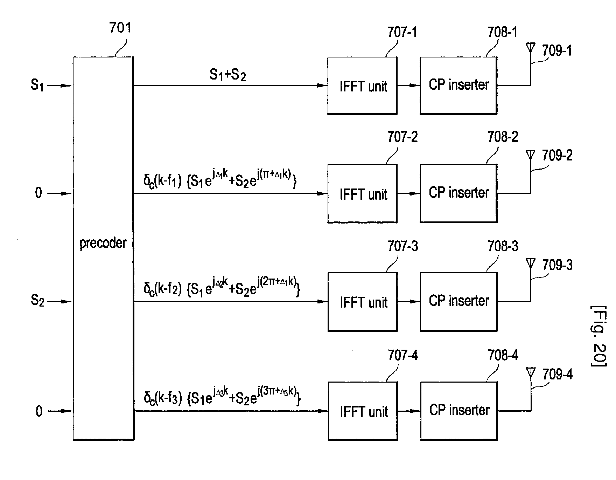

FIG. 20 is a diagrammatic view illustrating a precoding process which is spatially multiplexed where the number of transmission antennas is 4 and the transmission rate is 2.

Referring to FIG. 20, although there is four transmission antennas, only two symbols can be input to the precoder 701. In this case, the transmission rate is 2. To which position(of virtual antennas) of the precoder 701 the symbols are input can be selected according to channel quality information, etc. For example, there are symbol vectors {$S_1$, 0, $S_2$, 0} that are input to the precoder 701. The symbols {$N_{t1}$, N , N , N } transmitted from respective transmission antennas 709-1, 709-2, 709-3 and 709-4 are expressed by the following Equation 28:

MathFigure 28

$$\begin{bmatrix} N_{t1} \\ N_{t2} \\ N_{t3} \\ N_{t4} \end{bmatrix} = C_4 \times \begin{bmatrix} S_1 \\ 0 \\ S_2 \\ 0 \end{bmatrix}$$

$$= \frac{1}{\sqrt{4}} \begin{bmatrix} S_1 + S_2 \\ \delta_c(k-f_1)\{S_1 e^{j\triangle_1 k} + S_2 e^{j(\pi+\triangle_1 k)}\} \\ \delta_c(k-f_2)\{S_1 e^{j\triangle_2 k} + S_2 e^{j(2\pi+\triangle_2 k)}\} \\ \delta_c(k-f_3)\{S_1 e^{j\triangle_3 k} + S_2 e^{j(3\pi+\triangle_3 k)}\} \end{bmatrix}$$

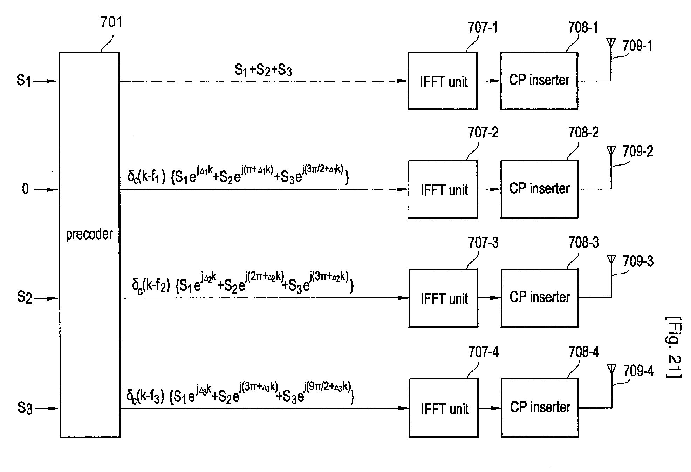

FIG. 21 is a diagrammatic view illustrating a precoding process which is spatially multiplexed where the number of transmission antennas is 4 and the transmission rate is 3.

Referring to 21, when the transmission rate is 3, only three symbols can be input to the precoder 701. To which position(of virtual antennas) of the precoder 701 the symbols are input can be selected according to channel quality information, etc. For example, there are symbol vectors $\{S_1, 0, S_2, 0\}$ that are input to the precoder 701. The symbols $\{N_{t1}, N_{t2}, N_{t3}, N_{t4}\}$ transmitted from respective transmission antennas 709-1, 709-2, 709-3 and 709-4 are expressed by the following Equation 29:

MathFigure 29

$$\begin{bmatrix} N_{t1} \\ N_{t2} \\ N_{t3} \\ N_{t4} \end{bmatrix} = C_4 \times \begin{bmatrix} S_1 \\ 0 \\ S_2 \\ S_3 \end{bmatrix}$$

$$= \frac{1}{\sqrt{4}} \begin{bmatrix} S_1 + S_2 + S_3 \\ \delta_c(k-f_1)\{S_1 e^{j\triangle_1 k} + S_2 e^{j(\pi+\triangle_1 k)} + S_3 e^{j(3\pi/2+\triangle_1 k)}\} \\ \delta_c(k-f_2)\{S_1 e^{j\triangle_2 k} + S_2 e^{j(2\pi+\triangle_2 k)} + S_3 e^{j(3\pi+\triangle_2 k)}\} \\ \delta_c(k-f_3)\{S_1 e^{j\triangle_3 k} + S_2 e^{j(3\pi+\triangle_3 k)} + S_3 e^{j(9\pi/2+\triangle_3 k)}\} \end{bmatrix}$$

The precoding is not limited to the above example, but can be applied to various transmission rates and a various number of antennas.

## VI. TRANSMITTER INCLUDING PRECODER

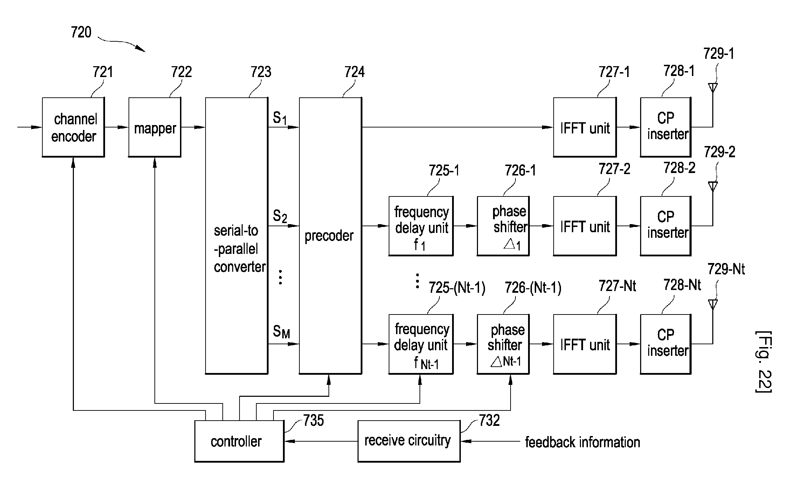

FIG. 22 is a block diagram illustrating a transmitter according to another example of the present invention.

Referring to FIG. 22, a transmitter 720 comprises a channel encoder 721, a mapper 722, a serial-to-parallel converter 723, a precoder 724, frequency delay units 725-1, ..., 725-(Nt-1) phase shifters 726-1, ..., 726-(Nt-1), inverse fast Fourier transform (IFFT) units 727-1, ..., 727-Nt, a receive circuitry 732 and a controller 735. Also, the transmitter 100 comprises Nt (Nt>1) antennas 729-1, ..., 729-Nt.

The receive circuitry 732 receives feedback information from a receiver (not shown). The controller 735 can determine the modulation and coding scheme (MCS) based on the feedback information applied thereto from the receive circuitry 732 so as to provide the determined coding scheme to the channel encoder 721 and adaptively provide the modulation scheme to the mapper 722. The controller 735 can adaptively control frequency delays $f_k$ of the frequency delay units 725-1, ..., 725-(Nt-1) and the phase periods $\Delta_k$ of the phase shifters 726-1, ..., 726-(Nt-1) based on the feedback information. In addition, the controller 735 can adaptively control a precoding scheme of the precoder 724 based on the feedback information.

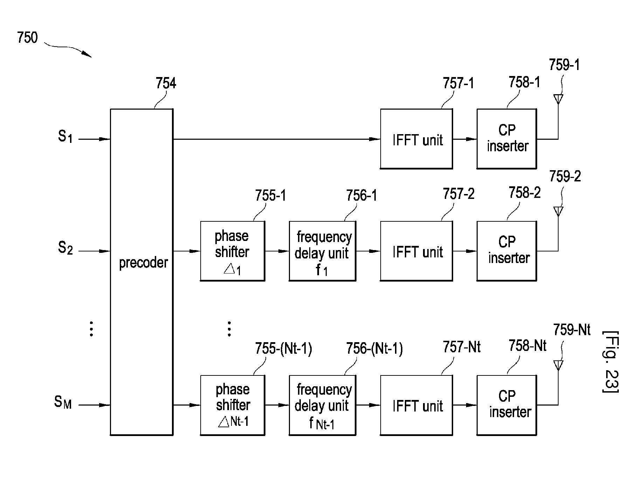

FIG. 23 is a block diagram illustrating a transmitter according to another example of the present invention.

Referring to FIG. 23, the transmitter 750 of FIG. 23 and the transmitter 700 of FIG. 15 are identical to each other except that the positions of the phase shifters 755-1, ..., 155-(Nt-1) and the frequency delay units 756-1, ..., 156-(Nt-1) are permutated.

A first one of symbols generated from the precoder 754 is converted into a time domain symbol, i.e., an OFDM symbol by the IFFT unit 757-1. A second one to an (Nt-1)-th one of the symbols generated from the precoder 754 are subjected to the cyclic phase shift, followed by the cyclic delay. Then, the cyclic delay symbols are inverted into the time domain symbols by the IFFT units 757-2, ..., 757-Nt. The CP is inserted to the time domain symbols by the CP inserters 758-1, ..., 758-Nt and then the time domain symbols inserted with the CP are transmitted from the transmission antennas 759-1, ..., 759-Nt.

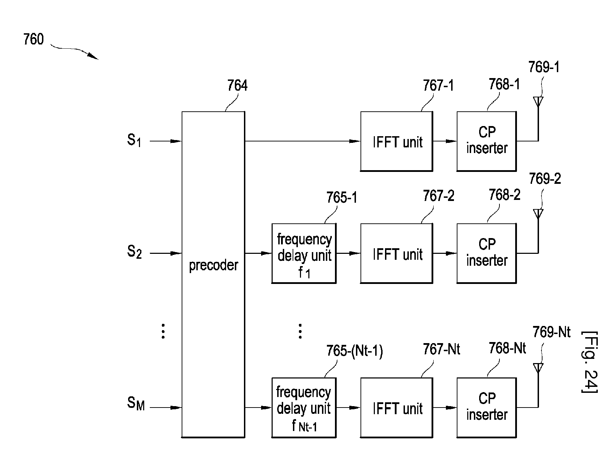

FIG. 24 is a block diagram illustrating a transmitter according to another example of the present invention.

Referring to FIG. 24, a transmitter 760 of FIG. 24 and the transmitter 700 of FIG. 15 are identical to each other except that the phase shifters are excluded in the transmitter 760.

A first one of symbols generated from the precoder 764 is converted into a time domain symbol, i.e., an OFDM symbol by the IFFT unit 767-1. A second one to an (Nt-1)-th one of the symbols generated from the precoder 764 are subjected to the cyclic delay. Then, the cyclic delay symbols are inverted into the time domain symbols by the IFFT units 767-2, ..., 767-Nt. The CP is inserted to the time domain symbols by the CP inserters 768-1, ..., 768-Nt and then the time domain symbols inserted with the CP are transmitted from the transmission antennas 769-1, ..., 769-Nt.

The operation of the frequency delay units 765-1,.., 765-(Nt-1) in the frequency domain can be expressed by a matrix shown in the following Equation 30:

MathFigure 30

$$Q' = \begin{bmatrix} 1 & 0 & 0 & \dots & 0 \\ 0 & \delta_c(k\text{-}f_1) & 0 & \dots & 0 \\ 0 & 0 & \delta_c(k\text{-}f_2) & \dots & 0 \\ . & . & . & . & . \\ 0 & 0 & 0 & \dots & \delta_c(k\text{-}f_{Nt\text{-}1}) \end{bmatrix}$$

where

$$\delta_c(k\text{-}f_i)$$

denotes a cyclic delta function meaning that a symbol transmitted from (i+1)-th transmission antennas from a k-th tone (sub-carrier) is cyclically delayed by a frequency delay $f_i$. That is, only the time selectivity can be increased through the frequency delay. This is more efficient to an environment where the movement speed of the user is low.

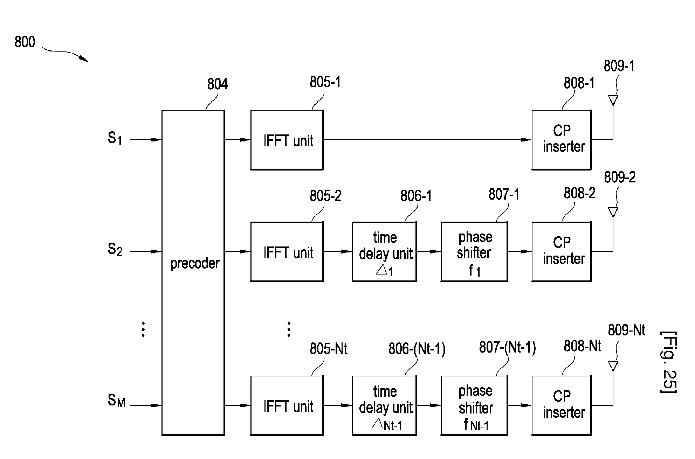

FIG. 25 is a block diagram illustrating a transmitter according to another example of the present invention.

Referring to FIG. 25, a transmitter 800 comprises a precoder 804, inverse fast Fourier transform units (IFFTs) 805-1, ..., 805-Nt, time delay units 806-1, ..., 806-(Nt-1) and phase shifters 807-1, ..., 807-(Nt-1). Also, the transmitter 800 comprises Nt (Nt>1) antennas 809-1, ..., 809-Nt.

The precoder 804 precodes M input symbols Sm, and the IFFT units 805-1, ..., 805-Nt convert the precoded input symbols into time domain symbols.

A symbol generated from a first IFFT unit 808-1 is inserted with a cyclic prefix (CP) by a first CP inserter 808-1 and then is transmitted from a first transmission antenna 809-1. A second one to an Nt-th one of the symbols generated from the IFFT units 805-2,..., 805-Nt are sequentially subjected to the cyclic delay and the cyclic phase shift by the time delay units 806-1, ..., 806-(Nt-1) and the phase shifters 807-1, ..., 807-(Nt-1). Then, the cyclically phase-shifted symbols are inserted with the CP by the CP inserters 808-2, ..., 808-Nt and then the symbols inserted with the CP are transmitted from the transmission antennas 809-2, ..., 809-Nt.

The time delay units 806-1, ..., 806-(Nt-1) cyclically delay the time of the symbols generated from the IFFT units. A delay period $\Delta_k$ refers to a time delay value of the symbol in the time domain relative to a k-th antenna. The cyclic delay refers to generating the time-delayed symbols in such a manner that a rear portion of the time domain sample delayed is again appended to a front portion of the time domain sample in case where the symbols are delayed by the delay periods $\Delta_k$. That is, a sample exceeding a valid length of the symbol is again inserted to the time delayed symbol.

The phase shifters 807-1, ..., 807-(Nt-1) cyclically shift phases of the time-delayed symbols generated from the time delay units 806-1, ..., 806-(Nt-1). The phase period $f_k$ refers to a phase shift value of the symbol in the time domain relative to a k-th antenna. The phase shifters 807-1, ..., 807-(Nt-1) shift phases of the symbols input from the time delay units by

$$e^{j2\pi f_k t}$$

.

The cyclic shift refers to generating the phase-shifted symbols in such a fashion that a rear portion of the time domain sample shifted is again appended to a front portion of the time domain sample in case where the symbols are delayed by the phase period $f_k$. That is, a sample exceeding a valid length of the symbol is again inserted to the phase shifted symbol.

Since the frequency selectivity varies depending on the delay periods $\Delta_k$, the delay k periods $\Delta_k$ can be set variously. The delay periods $\Delta_k$ may have different values or the k k same value by each transmission antenna or user. The delay periods $\Delta_k$ can also increase sequentially by each antenna. There is no limitation in a scheme of setting the delay periods $\Delta_k$, and other various schemes can be used. The delay periods $\Delta_k$ may k k vary depending on time.

Since the time selectivity varies depending on the phase periods f , the phase k periods $f_k$ can be set variously. The phase periods f k may have different values or the same value by each transmission antenna or user. Also, the phase periods $f_k$ can increase sequentially by each antenna. There is no limitation in a scheme of setting the phase periods f , and other various schemes can be used. The phase periods f may vary depending on time or user.

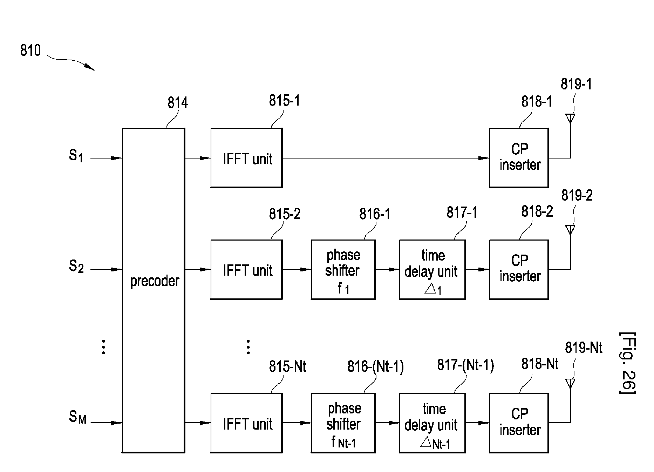

FIG. 26 is a block diagram illustrating a transmitter according to another example of the present invention.

Referring to FIG. 26, the transmitter 810 of FIG. 26 and the transmitter 800 of FIG. 25 are identical to each other except that the positions of the phase shifters 816-1, ..., 816-(Nt-1)) and the time delay units 817-1, ..., 817-(Nt-1) are permutated.

A symbol generated from a first IFFT unit 815-1 is inserted with a cyclic prefix (CP) by a first CP inserter 818-1 and is transmitted from a first transmission antenna 819-1. A second one to an Nt-th one of the symbols generated from the IFFT units 815-2,..., 815-Nt are sequentially subjected to the cyclic phase shift and the cyclic delay by the phase shifters 816-1, ..., 816-(Nt-1) and the time delay units 817-1, ..., 817-(Nt-1). Then, the cyclically delayed symbols are inserted with the CP by the CP inserters 818-2, ..., 818-Nt and then the symbols inserted with the CP are transmitted from the transmission antennas 819-2, ..., 819-Nt.

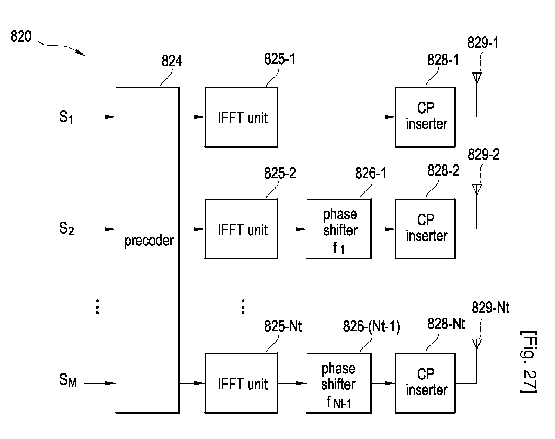

FIG. 27 is a block diagram illustrating a transmitter according to another example of the present invention.

Referring to FIG. 27, a transmitter 820 of FIG. 27 and the transmitter 800 of FIG. 25 are identical to each other except that the time delay units are excluded in the transmitter 820.

A symbol generated from a first IFFT unit 825-1 is inserted with a cyclic prefix (CP) by a first CP inserter 828-1 and is transmitted from a first transmission antenna 829-1. A second one to an Nt-th one of the symbols generated from the IFFT units 825-2,..., 825-Nt are sequentially subjected to the cyclic phase shift by the phase shifters 826-1, ..., 826-(Nt-1). Then, the cyclically phase shifted symbols are inserted with the CP by the CP inserters 828-2, ..., 828-Nt and then the symbols inserted with the CP are transmitted from the transmission antennas 829-2, ..., 829-Nt. That is, only the time selectivity can be increased through the phase shift. This is more efficient to an environment where the movement speed of the user is low.

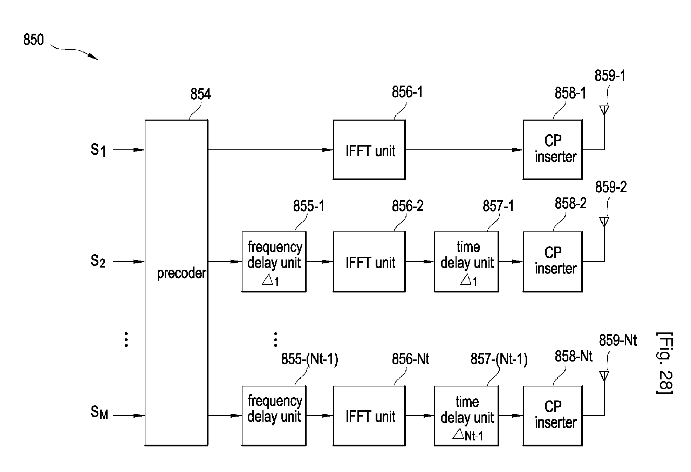

FIG. 28 is a block diagram illustrating a transmitter according to another example of the present invention.

Referring to FIG. 28, a transmitter 850 of FIG. 28 and the transmitter 800 of FIG. 25 are identical to each other except that the phase shifters in the time domain are replaced with frequency delay units 855-1, ..., 855-(Nt-1) in the frequency domain.

A first one of symbols generated from the precoder 854 is converted into a time domain symbol by the IFFT unit 856-1. At this time, the CP is inserted to the time domain symbol by the CP inserter 858-1 and then the time domain symbol inserted with the CP are transmitted from the transmission antennas 859. A second one to an (Nt-1)-th one of the symbols generated from the precoder 854 are differentially subjected to cyclic frequency delay by the frequency delay units 855-1, .., 855-(Nt-1) and then are subjected to IFFT by the IFFT units 856-2, ..., 856-Nt so as to be inverted into the time domain symbols. The time domain symbols are subjected to the cyclic delay by the time delay units 857-1, ..., 857-(Nt-1), and then the CP is inserted to the cyclically delayed symbols by the CP inserters 858-2, ..., 858-Nt. Then, the time domain symbols inserted with the CP are transmitted from the transmission antennas 859-2, ..., 859-Nt.

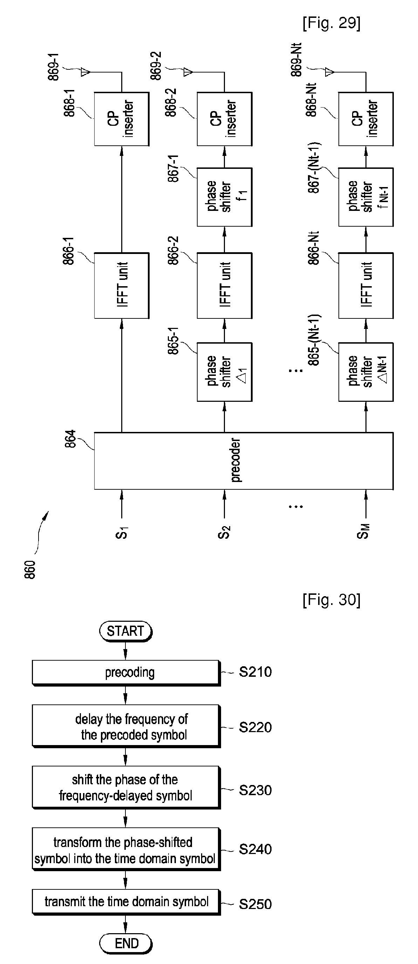

FIG. 29 is a block diagram illustrating a transmitter according to another example of the present invention.

Referring to FIG. 29, transmitter 860 of FIG. 29 and the transmitter 800 of FIG. 25 are identical to each other except that the time delay units in the time domain are replaced with phase shifters 865-1, ..., 865-(Nt-1) in the frequency domain.

A first one of the symbols generated from the precoder 864 is converted into a time domain symbol by the IFFT unit 866-1. At this time, the CP is inserted to the time domain symbol by the CP inserter 868-1 and then the time domain symbol inserted with the CP are transmitted from the transmission antennas 869. A second one to an (Nt-1)-th one of the symbols generated from the precoder 864 are subjected to the cyclic phase shift by the phase shifters 865-1, .., 865-(Nt-1) in the frequency domain and then are subjected to IFFT by the IFFT units 866-2, ..., 866-Nt so as to be inverted into the time domain symbols. The time domain symbols are subjected to the cyclic phase shift by the phase shifters 867-1, ..., 867-(Nt-1) in the time domain, and then the CP is inserted to the cyclically phase shifted symbols by the CP inserters 868-2, ..., 858-Nt. Then, the time domain symbols inserted with the CP are transmitted from the transmission antennas 869-2, ..., 869-Nt.

FIG. 30 is a flow chart illustrating a data transmission method according to another example of the present invention.

Referring to FIG. 30, the precoding process is performed on an input symbol S210. A frequency of the precoded symbol is cyclically delayed S220. Then, a phase of the frequency-delayed symbol is cyclically shifted S230. The phase-shifted symbol is converted into a time domain symbol S240. Subsequently, the time domain symbol is transmitted S250.

In another embodiment of the present invention, it is possible to cyclically shift the phase of the precoded symbol and then cyclically delay the phase-shifted symbol.

The steps of a method described in connection with the embodiments disclosed herein may be implemented by hardware, software or a combination thereof. The hardware may be implemented by an application specific integrated circuit (ASIC) that is designed to perform the above function, a digital signal processing (DSP), a programmable logic device (PLD), a field programmable gate array (FPGA), a processor, a controller, a microprocessor, the other electronic unit, or a combination thereof. A module for performing the above function may implement the software. The software may be stored in a memory unit and executed by a processor. The memory unit or the processor may employ a variety of means that is well known to those skilled in the art.

As the present invention may be embodied in several forms without departing from the essential characteristics thereof, it should also be understood that the above-described embodiments are not limited by any of the details of the foregoing description, unless otherwise specified, but rather should be construed broadly within its scope as defined in the appended claims. Therefore, all changes and modifications that fall within the metes and bounds of the claims, or equivalence of such metes and bounds are intended to be embraced by the appended claims.

**Claims**

1. A transmitter (860) comprising:

   a precoder (864) for precoding an input symbol into a precoded symbol,
   wherein the precoded symbol is a frequency domain symbol;
   a first phase shifter (865) for cyclically shifting a phase of the precoded symbol in a frequency domain,
   wherein the precoded symbol outputted from the precoder is provided to the first phase shifter (865);
   a frequency delay unit (855) for cyclically delaying a frequency of the phase-shifted precoded symbol,

wherein the phase-shifted precoded symbol outputted from the first phase shifter (865) is provided to the frequency delay unit (855);

an Inverse Fast Fourier Transform, IFFT, unit (866) for transforming the delayed frequency domain symbol into a time domain symbol by performing inverse fast Fourier transform,

wherein the delayed frequency domain symbol outputted from the frequency delay unit (855) is provided to the IFFT unit (866);

a second phase shifter (867) for cyclically shifting a phase of the time domain symbol,

a time delay unit (857) for cyclically delaying a time of the phase-shifted time domain symbol,

wherein the phase-shifted time domain symbol outputted from the second phase shifter (867) is provided to the time delay unit (857);

a cyclic prefix, CP,

inserter (868) for inserting a CP into the delayed time domain symbol,

wherein the delayed time domain symbol outputted from the time delay unit (857) is provided to the CP inserter (868); and

an antenna (868) among a plurality of antennas for transmitting the CP inserted time domain symbol.

2. A data transmission method in a multiple antenna system, the data transmission method comprising:

precoding (S210) an input symbol into a precoded symbol, wherein the precoded symbol is a frequency domain symbol;

after the precoding step, cyclically shifting (S230) a phase of the precoded symbol in a frequency domain;

after the shifting the phase of the precoded symbol, cyclically delaying (S220) a frequency of the phase-shifted precoded symbol;

after the delaying the frequency domain symbol, transforming (S240) the delayed frequency domain symbol into a time domain symbol by performing inverse fast Fourier transform, IFFT;

after transforming step, cyclically shifting a phase of the time domain symbol;

after the shifting the phase of the time domain symbol, cyclically delaying a time of the phase-shifted time domain symbol;

after the delaying the time domain symbol, inserting a prefix, CP,

into the delayed time domain symbol; and

after the inserting step, transmitting (S250) the CP inserted time domain symbol via an antenna among a plurality of antennas.

**Patentansprüche**

1. Sendegerät (860), das umfasst:

einen Vorcodierer (864) zum Vorcodieren eines Eingangssymbols in ein vorcodiertes Symbol,

wobei das vorcodierte Symbol ein Frequenzbereichssymbol ist;

einen ersten Phasenschieber (865) zum zyklischen Verschieben einer Phase des vorcodierten Symbols in einem Frequenzbereich,

wobei das von dem Vorcodierer ausgegebene vorcodierte Symbol an den ersten Phasenschieber (865) geliefert wird,

eine Frequenzverzögerungseinheit (855) zum zyklischen Verzögern einer Frequenz des phasenverschobenen vorcodierten Symbols,

wobei das von dem ersten Phasenschieber (865) ausgegebene phasenverschobene vorcodierte Symbol an die Frequenzverzögerungseinheit (855) geliefert wird;

eine Einheit einer inversen schnellen Fourier-Transformation, IFFT, zum Umwandeln des verzögerten Frequenzbereichssymbols in ein Zeitbereichssymbol durch Ausführen einer inversen schnellen Fourier-Transformation,

wobei das von der Frequenzverzögerungseinheit (855) ausgegebene verzögerte Frequenzbereichssymbol an die IFFT-Einheit (866) geliefert wird;

einen zweiten Phasenschieber (867) zum zyklischen Verschieben einer Phase des Zeitbereichssymbols,

eine Zeitverzögerungseinheit (857) zum zyklischen Verzögern einer Zeit des phasenverschobenen Zeitbereichssymbol,

wobei das von dem zweiten Phasenschieber (867) ausgegebene phasenverschobene Zeitbereichssymbol an die Zeitverzögerungseinheit (857) geliefert wird;

eine Einfügevorrichtung für ein zyklisches Präfix, CP, (868) zum Einfügen eines CP in das verzögerte Zeitbereichssymbol,

wobei das von der Zeitverzögerungseinheit (857) ausgegebene verzögerte Zeitbereichssymbol an die Einfügevorrichtung für ein CP (686) geliefert wird; und

eine Antenne (868) unter mehreren Antennen zum Senden des Zeitbereichssymbols, in das ein CP eingefügt wurde.

2. Datensendeverfahren in einem Mehrantennensystem, wobei das Datensendeverfahren umfasst:

Vorcodieren (S210) eines Eingangssymbols in ein vorcodiertes Symbol, wobei das vorcodierte Symbol ein Frequenzbereichssymbol ist;

nach dem Vorcodierungsschritt zyklisches Verschieben (S230) einer Phase des vorcodierten Symbols in einem Frequenzbereich,

nach dem Verschieben der Phase des vorcodierten Symbols zyklisches Verzögern (S220) einer Frequenz des phasenverschobenen vorcodierten Symbols,

nach dem Verzögern des Frequenzbereichssymbols Umwandeln (S240) des verzögerten Frequenzbereichssymbols in ein Zeitbereichssymbol durch Ausführen einer inversen schnellen Fourier-Transformation, IFFT;

nach dem Umwandlungsschritt zyklisches Verschieben einer Phase des Zeitbereichssymbols;

nach dem Verschieben der Phase des Zeitbereichssymbols zyklisches Verzögern einer Zeit des phasenverschobenen Zeitbereichssymbols;

nach dem Verzögern des Zeitbereichssymbols Einfügen eines Präfixes, CP, in das verzögerte Zeitbereichssymbol; und

nach dem Einfügeschritt Senden (S250) des Zeitbereichssymbols, in das ein CP eingefügt wurde, über eine Antenne unter mehreren Antennen.

**Revendications**

1. Emetteur (860) comprenant :

un précodeur (864) pour effectuer le précodage d'un symbole d'entrée en un symbole précodé,

dans lequel le symbole précodé est un symbole de domaine de fréquences ;

un premier dispositif de déplacement de phase (865) pour effectuer le déplacement cyclique d'une phase du symbole précodé dans un domaine de fréquences,

dans lequel le symbole précodé délivré du précodeur est fourni au premier dispositif de déplacement de phase (865) ;

une unité de retard de fréquences (855) pour retarder cycliquement une fréquence du symbole précodé à déplacement de phase,

dans lequel le symbole précodé à déplacement de phase délivré du premier dispositif de déplacement de phase (865) est fourni à l'unité de retard de fréquences (855) ;

une unité de transformée rapide de Fourier inverse, IFFT, (866) pour transformer le symbole de domaine de fréquences retardé en un symbole de domaine de temps en effectuant une transformée rapide de Fourier inverse,

dans lequel le symbole de domaine de fréquences retardé délivré de l'unité de retard de fréquences (855) est fourni à l'unité IFFT (866) ;

un deuxième dispositif de déplacement de phase (867) pour effectuer le déplacement cyclique d'une phase du symbole de domaine de temps,

une unité de retard de temps (857) pour retarder cycliquement un temps du symbole de domaine de temps à déplacement de phase,

dans lequel le symbole de domaine de temps à déplacement de phase délivré du deuxième dispositif de déplacement de phase (867) est fourni à l'unité de retard de temps (857) ;

un dispositif d'insertion de préfixe cyclique, CP, (868) pour insérer un CP dans le symbole de domaine de temps retardé,

dans lequel le symbole de domaine de temps retardé délivré de l'unité de retard de temps (857) est fourni au dispositif d'insertion de CP (868) ; et

une antenne (868) parmi une pluralité d'antennes pour émettre le symbole de domaine de temps à insertion de CP.

2. Procédé d'émission de données dans un système à plusieurs antennes, le procédé d'émission de données comprenant :

le précodage (S210) d'un symbole d'entrée en un symbole précodé, dans lequel le symbole précodé est un symbole de domaine de fréquences ;

après l'étape du précodage, le déplacement cyclique (S230) d'une phase du symbole précodé dans un domaine de fréquences,

après le déplacement de la phase du symbole précodé, le retard cyclique (S220) d'une fréquence du symbole précodé à déplacement de phase,

après le retard du symbole de domaine de fréquences, la transformation (S240) du symbole de domaine de fréquences retardé en un symbole de domaine de temps en effectuant une transformée rapide de Fourier inverse, IFFT ;

après l'étape de la transformation, le déplacement cyclique d'une phase du symbole de domaine de temps,

après l'étape du déplacement de la phase du symbole de domaine de temps, le retard cyclique d'un temps du symbole de domaine de temps à déplacement de phase,

après l'étape du retard du symbole de domaine de temps, l'insertion d'un préfixe cyclique, CP, dans le symbole de domaine de temps retardé ; et

après l'étape de l'insertion, l'émission (S250) du symbole de domaine de temps à insertion de CP par l'intermédiaire d'une antenne parmi une pluralité d'antennes.

EP 2 057 757 B1

[Fig. 1]

[Fig. 2]

[Fig. 3]

EP 2 057 757 B1

[Fig. 4]

[Fig. 5]

[Fig. 6]

[Fig. 7]

[Fig. 8]

[Fig. 9]

600

| 601 | 602 | 603 |
|---|---|---|

channel encoder → mapper → IFFT unit →

604-1 | 605-1 | 606-1 | 609-1

time delay unit △1 → phase shifter f₁ → CP inserter →

⋮ 604-Nt | 605-Nt | 606-Nt | 609-Nt

time delay unit △Nt → phase shifter f Nt → CP inserter →

[Fig. 10]

[Fig. 11]

650

651 652 653 654-1 655-1 656-1

```
channel
encoder  →  mapper  →  IFFT unit  →●→  phase
                                        shifter
                                        f₁      →  time
                                                   delay unit
                                                   △1      →  CP inserter  →  ▽ 659-1
```

654-Nt 655-Nt 656-Nt

```
               phase
               shifter
               f Nt      →  time
                            delay unit
                            △Nt      →  CP inserter  →  ▽ 659-Nt
```

[Fig. 12]

[Fig. 13]

[Fig. 14]

START

prepare OFDM symbol — S110

delay the OFDM symbol — S120

shift the phase of the
time-delayed OFDM symbol — S130

transmit the phase-shifted
OFDM symbol — S140

END

[Fig. 15]

$S_1 \longrightarrow$ **precoder** (701)

$S_1 \longrightarrow$

$S_1\{1+\delta_c(k-f_1)e^{j\Delta_1 k}\}$ → **IFFT unit** (705-1) → **CP inserter** (708-1) → 709-1

$S_1\{1-\delta_c(k-f_1)e^{j\Delta_1 k}\}$ → **IFFT unit** (705-2) → **CP inserter** (708-2) → 709-2

[Fig. 16]

[Fig. 17]

precoder (701)

$S_1\{1+\delta_c(k-f_1)e^{j\Delta_1 k}+\delta_c(k-f_2)e^{j\Delta_2 k}+\delta_c(k-f_3)e^{j\Delta_3 k}\}$ → IFFT unit (705-1) → CP inserter (708-1) → 709-1

$S_1\{1+\delta_c(k-f_1)e^{j(\pi/2+\Delta_1 k)}+\delta_c(k-f_2)e^{j(\pi+\Delta_2 k)}+\delta_c(k-f_3)e^{j(3\pi/2+\Delta_3 k)}\}$ → IFFT unit (705-2) → CP inserter (708-2) → 709-2

$S_1\{1+\delta_c(k-f_1)e^{j(\pi+\Delta_1 k)}+\delta_c(k-f_2)e^{j(2\pi+\Delta_2 k)}+\delta_c(k-f_3)e^{j(3\pi+\Delta_3 k)}\}$ → IFFT unit (705-3) → CP inserter (708-3) → 709-3

$S_1\{1+\delta_c(k-f_1)e^{j(3\pi/2+\Delta_1 k)}+\delta_c(k-f_2)e^{j(3\pi+\Delta_2 k)}+\delta_c(k-f_3)e^{j(9\pi/2+\Delta_3 k)}\}$ → IFFT unit (705-4) → CP inserter (708-4) → 709-4

$S_1$

701

$S_1$ →

$S_2$ →

precoder

$S_1 + S_2$

$S_1 \delta_c(k-f_1)e^{j\Delta_1 k} -S_2 \delta_c(k-f_1)e^{j\Delta_1 k}$

707-1

IFFT unit

708-1

CP inserter

709-1

707-2

IFFT unit

708-2

CP inserter

709-2

[Fig. 18]

44

45

701

707-1  708-1  709-1

$S_1$

precoder

$S_1+S_2+S_3+S_4$

IFFT unit

CP inserter

707-2  708-2  709-2

$S_2$

$\delta_c(k-f_1)\ \{S_1 e^{j\Delta_1 k}+S_2 e^{j(\pi/2+\Delta_1 k)}+S_3 e^{j(\pi+\Delta_1 k)}+S_4 e^{j(3\pi/2+\Delta_1 k)}\}$

IFFT unit

CP inserter

707-3  708-3  709-3

$S_3$

$\delta_c(k-f_2)\ \{S_1 e^{j\Delta_2 k}+S_2 e^{j(\pi+\Delta_2 k)}+S_3 e^{j(2\pi+\Delta_2 k)}+S_4 e^{j(3\pi+\Delta_2 k)}\}$

IFFT unit

CP inserter

707-4  708-4  709-4

$S_4$

$\delta_c(k-f_3)\ \{S_1 e^{j\Delta_3 k}+S_2 e^{j(3\pi/2+\Delta_3 k)}+S_3 e^{j(3\pi+\Delta_3 k)}+S_4 e^{j(9\pi/2+\Delta_3 k)}\}$

IFFT unit

CP inserter

[Fig. 19]

46

701

$S_1 \rightarrow$

$0 \rightarrow$

$S_2 \rightarrow$

$0 \rightarrow$

precoder

$S_1 + S_2$

707-1 IFFT unit → 708-1 CP inserter → 709-1

$\delta_c(k-f_1)\{S_1 e^{j\Delta_1 k} + S_2 e^{j(\pi+\Delta_1 k)}\}$

707-2 IFFT unit → 708-2 CP inserter → 709-2

$\delta_c(k-f_2)\{S_1 e^{j\Delta_2 k} + S_2 e^{j(2\pi+\Delta_1 k)}\}$

707-3 IFFT unit → 708-3 CP inserter → 709-3

$\delta_c(k-f_3)\{S_1 e^{j\Delta_3 k} + S_2 e^{j(3\pi+\Delta_3 k)}\}$

707-4 IFFT unit → 708-4 CP inserter → 709-4

[Fig. 20]

[Fig. 21]

precoder 701

$S_1 + S_2 + S_3$

$\delta_c(k\text{-}f_1)\{S_1 e^{j\alpha_1 k} + S_2 e^{j(\pi+\alpha_1 k)} + S_3 e^{j(3\pi/2+\alpha_1 k)}\}$

$\delta_c(k\text{-}f_2)\{S_1 e^{j\alpha_2 k} + S_2 e^{j(2\pi+\alpha_2 k)} + S_3 e^{j(3\pi+\alpha_2 k)}\}$

$\delta_c(k\text{-}f_3)\{S_1 e^{j\alpha_3 k} + S_2 e^{j(3\pi+\alpha_3 k)} + S_3 e^{j(9\pi/2+\alpha_3 k)}\}$

$S_1$
$0$
$S_2$
$S_3$

707-1 IFFT unit — 708-1 CP inserter — 709-1
707-2 IFFT unit — 708-2 CP inserter — 709-2
707-3 IFFT unit — 708-3 CP inserter — 709-3
707-4 IFFT unit — 708-4 CP inserter — 709-4

[Fig. 22]

[Fig. 23]

[Fig. 24]

[Fig. 25]

[Fig. 26]

[Fig. 27]

[Fig. 28]

[Fig. 29]

[Fig. 30]

START

| precoding | S210 |

| delay the frequency of the precoded symbol | S220 |

| shift the phase of the frequency-delayed symbol | S230 |

| transform the phase-shifted symbol into the time domain symbol | S240 |

| transmit the time domain symbol | S250 |

END

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006015108 A2
- WO 2005046113 A2

**Non-patent literature cited in the description**

- The merger of a single oscillating-beam smart antenna and MC-CDMA: transmit diversity, frequency diversity and directionality. **ZEKAVAT S et al.** BRODBAND COMMUNICATIONS FOR THE INTERNET ERA SYMPOSIUM DIGEST, 2001 I EEE EMERGING TECHNOLOGIES SYMPOSIUM ON SEP 10-11, 2001. IEEE, 10 September 2001, 107-112

- **J. TAN ; G. L. STUBER.** Multicarrier delay diversity modulation for MIMO systems. *IEEE Trans. on Wireless Comm.,* September 2004, vol. 3 (5), 1756-1763